# EUROPÄISCHE PATENTSCHRIFT

(11) **EP 2 065 165 B1**
(45) Veröffentlichungstag und Bekanntmachung des Hinweises auf die Patenterteilung: **04.11.2009**
(21) Anmeldenummer: 07023229.3
(22) Anmeldetag: 30.11.2007
(51) Int. Cl.: B29C 65/00, B29C 65/16, B41M 5/26, C08K 3/08

(54) **Verwendung einer Mischung mit sphärischen Metallpartikeln und Metallflakes als Lasermarkierungs- oder Laserschweissbarkeitsmittel sowie lasermarkierbarer und/oder laserschweissbarer Kunststoff**
Utilisation of a mixture of spherical metal particles and metal flakes as laser markability or laser weldability means and laser markable and/or laser weldable plastic
Utilisation d'un mélange de particules métalliques sphériques et de flocons métalliques jouant le rôle d'agent de marquage laser ou d'agent apte au soudage laser, et matériau plastique apte au marquage laser et/ou au soudage laser

(43) Veröffentlichungstag der Anmeldung: 03.06.2009
(73) Patentinhaber: Eckart GmbH, 90763 Fürth (DE)
(72) Erfinder: Trummer, Stefan Dr., 90480 Nürnberg (DE); Schaal, Martin, 91224 Hohenstadt (DE); Greb, Marco, 90489 Nürnberg (DE)
(74) Vertreter: LOUIS, PÖHLAU, LOHRENTZ

(56) Entgegenhaltungen:
- EP-A- 0 126 787
- EP-A- 1 145 864
- EP-A- 1 215 233
- EP-A- 1 279 517
- US-A1- 2006 276 565

## Beschreibung

Die Erfindung betrifft die Verwendung einer Mischung mit sphärischen Metallpartikeln und Metallflakes als Additiv für die Lasermarkierung und/oder Laserschweißung von Kunststoffen. Die Erfindung betrifft ferner einen lasermarkierbaren und/oder laserschweißbaren Kunststoff, der eine Mischung mit sphärischen Metallpartikeln und Metallflakes enthält.

Die Kennzeichnung von Kunststoffen durch Lasermarkierung wie auch das Schweißen von Kunststoffteiten mittels Laserenergie ist an sich bekannt. Beides wird durch Absorption der Laserenergie im Kunststoffmaterial entweder direkt durch Wechselwirkung mit dem Polymer oder indirekt mit einem dem Kunststoffmaterial zugesetzten lasersensitiven Mittel bewirkt. Das lasersensitive Mittel kann ein organischer Farbstoff oder ein Pigment sein, welches durch Absorption der Laserenergie eine lokale sichtbare Verfärbung des Kunststoffs bewirkt. Es kann auch eine Verbindung sein, die bei Bestrahlung mit Laserlicht von einer unsichtbaren, farblosen in eine sichtbare Form umgewandelt wird. Beim Laserschweißen wird das Kunststoffmaterial durch Absorption der Laserenergie im Fügebereich so stark erwärmt, dass das Material aufschmilzt und beide Teile miteinander verschweißen.

Die Kennzeichnung von Produktionsgütern wird im Zuge der allgemeinen Rationalisierungsmaßnahmen in nahezu allen Industriezweigen zunehmend wichtiger. So müssen etwa Produktionsdaten, Chargennummern, Verfallsdaten, Produktkennungen, Barcodes, Firmenlogos etc. aufgebracht werden. Gegenüber konventionellen Kennzeichnungstechniken wie Drucken, Prägen, Stempeln, Etikettieren ist die Lasermarkierung deutlich schneller, da berührungslos arbeitend, präziser und ohne weiteres auch auf nicht planen Oberflächen aufzubringen. Da die Lasermarkierungen unter der Oberfläche im Material erzeugt werden, sind diese dauerhaft, haltbar und wesentlich sicherer gegenüber Entfernung, Veränderung oder gar Fälschung. Kontakt mit anderen Medien, etwa bei Flüssigkeitsbehaltem und Verschlüssen, ist aus diesem Grund - unter der selbstverständlichen Voraussetzung, dass die Kunststoffmatrix beständig ist - ebenfalls unkritisch. Sicherheit und Dauerhaftigkeit von Produktionskennungen sowie Kontaminationsfreiheit sind äußerst wichtig etwa bei Verpackungen von Pharmazeutika, Lebensmitteln und Getränken.

Die Lasermarkierungstechnologie hat sich insbesondere im Zusammenhang mit der Markierung von Kunststoffen als sehr geeignet erwiesen. Um eine effiziente Markierung von Kunststoffen durchführen zu können, ist es erforderlich, eine ausreichende Wechselwirkung zwischen dem zu markierenden Kunststoff und dem Laserlicht zu erzeugen. Dabei ist darauf zum einen zu achten, dass die in den Kunststoff eingebrachte Energie nicht zu hoch ist, weil dadurch der Kunststoffgegenstand bzw. dessen Textur zerstört werden kann. Auf der anderen Seite darf der Laserstrahl nicht ohne signifikante Wechselwirkung durch den Kunststoff hindurchtreten, da in diesem Fall keine Kennzeichnung des Kunststoffs möglich ist.

Um die Wechselwirkung des Laserstrahles mit dem Kunststoff zu erhöhen, werden Kunststoffe verwendet, in die Absorptionsmittel, auch als Absorber bezeichnet, eingearbeitet sind. Diese Absorptionsmittel können bspw. lasermarkierbare Polymere oder aber auch Perlglanzpigmente und Metalleffektpigmente sein.

Im Falle von Perlglanzpigmenten und Metalleffektpigmenten kommt es zu einer Erhitzung dieser Pigmente durch die Einstrahlung von Laserlicht. In der unmittelbaren Umgebung der Perlglanzpigmente und der Metalleffektpigmente erfolgt dann eine thermische Veränderung des Kunststoffs, z.B. eine Carbonisierung oder ein Aufschäumen des Kunststoffs, wodurch eine Markierung oder Kennzeichnung des Kunststoffgegenstandes möglich ist.

Die DE 197 26 136 A1 offenbart die Verwendung von lasermarkierbaren Polymeren in Form von mikrovermahlenen Partikeln mit einer Teilchengröße von 0,1 bis 100 µm. Nachteilig bei diesen lasermarkierbaren Polymeren ist, dass diese während der Verarbeitung des mit den lasermarkierbaren Polymeren dotierten Kunststoffen schmelzen können. Insoweit ist es erforderlich, dass die Schmelzbereiche des eingearbeiteten lasermarkierbaren Polymers und des verwendeten Kunststoffsystems aufeinander abgestimmt werden müssen.

Die DE 198 10 952 A1 offenbart die Verwendung von Perlglanzpigmenten oder Metallglanzpigmenten als Absorptionsmittel In Kunststoffen.

In der WO 2004/045857 A2 wird ein Lasermarkierungsprozess beschrieben unter Verwendung einer Farbe, die perlglanzpigmente und Metalleffektpigmente als lasersensitive Materialien enthalten können.

Aus der WO 2007/062785 A1 ist ein lasertransferierbares Sicherheitsmerkmal, bei dem als lasersensitive Materialien u.a. Perlglanzpigmente oder Metalleffektpigmente oder Metallpulver einschließlich deren Mischungen Verwendung finden können. Hierbei sind insbesondere Perlglanzpigmente bevorzugt .

Nachteilig bei der Verwendung von Perlglanzpigmenten oder Metallglanzpigmenten bzw. Metalleffektpigmenten ist, dass ein zufriedenstellender Kontrast nach der Lasermarkierung nur mit einer hohen Pigmentierung erreicht werden kann. Die Pigmentmenge muss so hoch konzentriert gewählt werden, dass es hierbei zwangsläufig zu einer Einfärbung mit den Perlglanz- bzw. Metalleffektpigmenten des Kunststoffs kommt.

Somit ist es bei der ausschließlichen Verwendung von Perlglanzpigmenten bzw. Metalleffektpigmenten in nicht zufriedenstellender Weise möglich, eine kontraststarke Lasermarkierung ohne merkbare Farbgebung im Falle von Perlglanzpigmenten (Perlglanzeffekt) bzw. ohne merkbare metallische Einfärbung im Falle von Metallglanz- bzw. Metalleffektpigmenten zu erreichen.

Weiterhin führt die plättchenartige Struktur der Perlglanzpigmente bzw. der Metallglanz- oder Metalleffektpigmente bei den zu verwendenden Konzentrationen nachteiligerweise dazu, dass sich die Pigmente in der während des Spritzgießens der Kunststoffmasse prozessbedingt auftretenden laminaren Strömung aufgrund ihrer plättchenartigen Struktur ausrichten, was zu Fließlinien oder Schlieren in dem hergestellten Kunststoffgegenstand führt.

Um einen gewünschten Kontrast bei der Lasermarkierung von Kunststoffen zu erhalten, wird gemäß der Lehre der EP 1 145 864 A1 ein Gemisch aus Metall- bzw. Halbmetallpulver und eines Effektpigmentes oder mehrerer Effektpigmente auf Basis von Schichtsilikaten verwendet. Auch hier erfolgt eine für klare und transparente Kunststoffe unerwünschte sichtbare Einfärbung des Kunststoffs. Weiterhin werden durch die Perlglanzpigmente nachteiligerweise ebenfalls Schlieren bzw. Fließlinien in dem hergestellten Kunststoffgegenstand erzeugt.

In der DE 10 2004 053 376 A1 werden farbige Lasermarkierungen und Laserbeschriftungen von Kunststoffen, die auf einer Verschweißung eines polymerhaltigen Beschriftungsmediums mit der Kunststoffoberfläche beruhen, offenbart. In dieser Schrift werden u.a. auch kugelförmige Metallpulver als zur Markierung geeignete Energieabsorber erwähnt. Allerdings werden keine Angaben hinsichtlich der Größe der Metallpulver gemacht.

Die JP 11070734 AA beschreibt u.a. Metallpulver als Absorber, um Laserstrahlen zu maskieren. Hierbei werden die Metallpulver in einer Konzentration von 5 bis 90 % bezogen auf die abschirmende Schicht verwendet. Bei diesen sehr hohen Konzentrationen tritt zwangsläufig eine Trübung des Mediums ein.

Gemäß der Lehre der DE 10 2004 045 305 A1 kann das im Stand der Technik bestehende Problem, dass die Absorber die zu beschriftenden Kunststoffe nachhaltig einfärben, dadurch behoben werden, dass in das Kunststoffmaterial eine Boridverbindung, vorzugsweise Lanthanhexaborid eingearbeitet wird. Nachteilig ist, dass diese Boridverbindungen, insbesondere Lanthanhexaborid, einen signifikanten Kostenfaktor darstellen. Insofern eignen sich diese Boridverbindungen nicht als ein in großem Umfang verwendbares Lasermarkierungsmittel.

Um eine Markierung von transparenten Kunststoffmaterialien ohne Einfärbung zu ermöglichen, wird gemäß der Lehre der US 6,693,657 B2 sowie der WO 2005/047009 ein Lasermarkierungsmittel verwendet, das ein Gemisch von Antimonoxid und Zinnoxid umfasst. In der WO 2005/084956 sind hochtransparente Kunststoffmaterialien beschrieben, die mittels nanoskaliger Indium-Zinnoxid- oder Antimon-Zinnoxidteilchen lasermarkierbar und/oder laserschweißbar sind. Nachteilig ist, dass Antimonoxid wie jede andere Antimonverbindung hochgiftig ist. Insofern stellt dieses Lasermarkierungsmittel zum einen bei der Herstellung und Verarbeitung als auch bei der Entsorgung ein erhebliches Risiko für Umwelt und Mensch dar, da zunächst Antimon bzw. Antimon-haltige Verbindungen verwendet und schließlich die Kunststoffartikel, die Antimon und/oder Antimon-haltige Verbindungen aufweisen, wieder entsorgt werden müssen.

In der WO 2002/055287 A1 wird ein Verfahren zur Herstellung laserverschweißter Verbundformteile beschrieben. Hier werden Metallflocken und Metallpulver als Füllstoffe erwähnt. Diese werden allerdings in relativ hohen Konzentrationen vor 1 bis 60 Gew-%, bezogen auf das Kunststoffformteil, eingesetzt.

Weitere konventionelle lasermarkierbare oder laserschweißbare Kunststoffe sind aus EP-A-0126787 und US-A-2006/0276565 bekannt.

Aufgabe der vorliegenden Erfindung ist es, ein Lasermarkierungsmittel bereitzustellen, das eine Markierung von transparenten Kunststoffmaterialien mit gutem Kontrast bei hoher Effizienz ermöglicht. Die Effizienz soll dadurch gekennzeichnet sein, das möglichst geringe Mengen des Lasermarkierungsmittel verwendet werden müssen. Vorzugsweise soll ein guter Kontrast erhalten werden, ohne dabei die Kunststoffmaterialien zwangsläufig einfärben zu müssen.

Eine weitere Aufgabe der Erfindung ist es, ein toxikologisch unbedenkliches Lasermarkierungsmittel bereitzustellen, das preisgünstig und in großen Mengen zur Verfügung steht.

Eine weitere Aufgabe ist es, einen lasermarkierbaren und/oder laserschweißbaren Kunststoff mit einem Lasermarkierungsmittel bereitzustellen, welcher praktisch keine Eintrübungen oder Einfärbungen durch das Lasermarkierungsmittel aufweist.

Die der Erfindung zugrundeliegende Aufgabe wird gelöst durch die Verwendung einer Mischung mit sphärischen Metallpartikeln und Metallflakes als Lasermarkierungsmittel in einem Kunststoff, wobei die mittels Lasergranulometrie bestimmte Korngrößenverteilung der sphärischen Metallpartikel und der Metallflakes in der Mischung, in der Form der Volumen-gemittelten Summendurchgangskomgrößenverteilung, einen D_{Mischung, 90}-Wert von < 100 µm und einen D_{Mischung, 50}-Wert von < 60 µm, aufweisen.

Bevorzugte Weiterbildungen der erfindungsgemäßen Verwendung sind in den Unteransprüchen 2 bis 11 angegeben.

Die der Erfindung zugrundeliegende Aufgabe wird auch durch Bereitstellung eines Masterbatches gelöst, wobei der Masterbatch die gemäß den Ansprüchen 1 bis 11 zu verwendende Mischung mit sphärischen Metallpartikeln und Metallflakes sowie mindestens einen Dispersionsträger enthält.

Bevorzugte Weiterbildungen des erfindungsgemäßen Masterbatches sind in den Unteransprüchen 13 bis 15 angegeben.

Ebenso wir die Aufgabe der Erfindung auch durch Verwendung eines Masterbatches nach einem der Ansprüche 12 bis 15 zur Herstellung eines lasermarkierbaren und/oder laserschweißbaren Kunststoffs gelöst.

Die Aufgabe der Erfindung wird ferner gelöst durch Bereitstellung eines lasermarkierbaren und/oder laserschweißbaren Kunststoffs, welcher eine gemäß einem der Ansprüche 1 bis 11 zu verwendende Mischung mit sphärischen Metallpartikeln und Metallflakes oder einen Masterbatch gemäß einem der ansprüche 12 bis 15 enthält.

Bevorzugte Weiterbildungen des erfindungsgemäßen lasermarkierbaren und/oder laserschweißbaren Kunststoffs sind in den Unteransprüchen 18 bis 25 angegeben.

Die Lasergranulometrie ist ein Laserbeugungsverfahren, bei dem die Größe der Partikel aus der Beugung des Laserlichts ermittelt wird. Da die verwendeten Materialien bevorzugt als Pulver verwendet werden, wird vorzugsweise das Laserbeugungsverfahren mit dem Gerät Helos der Fa. Sympatec, Clausthal-Zellerfeld, Deutschland, gemäß Herstellerangaben durchgeführt.

Die Korngrößenverteilung der den sphärischen Metallpartikeln anteilig zugesetzten Metallflakes weist hierbei bevorzugt einen D_{Flake,90}-Wert < 100 µm und einen Wert von D_{Flake, 50} im Bereich von 1 µm bis 60 µm auf, besonders bevorzugt ist dabei der D_{Flake, 50}-Wert im Bereich von 2 µm bis 40 µm.

Gemäß einer bevorzugten Variante der Erfindung sind die sphärischen Metallpartikel und Metallflakes weitgehend schwermetallfrei.

Unter schwermeta.11frer wird im Sinne der Erfindung verstanden ,wenn der prozentuale Gewichtsanteil der Schwermetalle der sphärischen Metallpartikel und der Metallflakes unabhängig voneinander unter 0,5 Gew.-% und bevorzugt unter 0,1 Gew.-% beträgt. Unter Schwermetallen werden hierbei im wesentlichen toxikologisch bedenkliche Schwermetalle wie Blei, Arsen, Antimon, Quecksilber, Bismut, Cobalt, Indium, Thalium, Cadmium, etc. und deren Mischungen verstanden.

Unter "weitgehend schwermetallfrei" wird im Sinne der Erfindung verstanden, daß der prozentuale Gewichtsanteil der Schwermetalle der sphärischen Metallpartikel und der Metallflakes unabhängig voneinander bis zu maximal 1 Gew.-% betragen kann.

Metallpulver sind seit langem bekannt. Sie werden u.a. als Ausgangsmaterial zur Herstellung von Metalleffektpigmenten verwendet. So wird Zinkpulver beispielsweise als Korrosionspigment eingesetzt.

Metallflakes werden üblicherweise als Metalleffektpigmente in Applikationsmedien wie Farben, Lacke, Druckfarben, Kunststoffen und Kosmetika eingesetzt, um einen optischen Metalleffekt zu erzeugen. Hierunter wird üblicherweise der Flopeffekt, metallischer Glanz und Brillanz sowie das hohe Deckvermögen verstanden. So werden beispielsweise Aluminium- oder Bronzeplättchen verwendet, um silberfarbene bzw. goldfarbene Effekte in Lacken zu erzeugen.

Unter Metallflakes werden im Sinne der Erfindung plättchenförmige Metallpartikel verstanden, die einen Formfaktor von 2 bis 1.500 und bevorzugt von 5 bis 500 aufweisen. Unter Formfaktor wird der Quotient aus mittlerer Teilchengröße D_{Flake,50} und mittlerer Dicke verstanden. Die Begriffe "Metallflakes" und "metalleffektpigmente" werden vorliegend austauschbar verwendet.

Unter sphärischen Metallpartikeln wird im Sinne der Erfindung nicht notwendigerweise eine absolut konzentrische dreidimensionale Struktur verstanden.

Unter sphärischen Metallpartikeln wird im Sinne der Erfindung verstanden, dass diese keine plättchenartige Form aufweisen, wie dies bei Effektpigmenten, bspw. Perlglanzlpigmenten oder Metalleffektpigmenten, der Fall ist. Der Formfaktor der sphärischen Metallpigmente ist kleiner als 2:1, Unter dem Begriff sphärische Form wird im Sinne der Erfindung beispielsweise auch eine Form verstanden, die nur eine angenähert kugelförmige Form, eine ellipsoide Form aufweist oder spratzig ist. Eine spratzige Form ist insbesondere dadurch gekennzeichnet, dass auf einem nichtflächigen Körper an der Oberfläche bspw, dendritische Fortsätze vorhanden sein können. Zudem kann die Oberfläche auch irregulär geformt sein kann. Derartige sphärische Metallpartikel können bspw. durch Verdüsung oder Zerstäubung von geschmolzenem Metall erhalten werden. Sie werden kommerziell in großen Mengen hergestellt und sind preisgünstig erhältlich, beispielsweise von der Fa. Ecka Granulate (D-91235 Velden, Deutschland).

Es hat sich völlig überraschend herausgestellt, dass sich Metallpulver in Form einer Mischung mit sphärischen Metallpartikeln und Metallflakes hervorragend als Lasermarkierungsadditiv eignen. Neben den sphärischen Metallpartikeln und Metallflakes können in der Mischung auch weitere Additive oder Zusätze enthalten sein.

Gemäß einer bevorzugten Weiterbildung besteht die zu verwendende Mischung aus sphärischen Metallpartikeln und Metallflakes.

Völlig überraschend ist dabei, dass eine Mischung aus sphärischen Metallpartikeln und Metallflakes eine kontrastreiche Kennzeichnung ermöglicht, ohne dass dabei notwendigerweise transparente Kunststoffmaterialien eingetrübt oder eingefärbt sein müssen.

Die ausschließliche Verwendung von Metallflakes wirkt sich sehr stark nachteilig auf die Transparenz eines Kunststoffes aus. Bereits bei relativ geringen Konzentrationen kann es zu einer starken Eintrübung bzw. metallischen Einfärbung kommen, was im Sinne der Aufgabenstellung als nachteilig gesehen wird.

Es hat sich überraschend herausgestellt, das eine Mischung mit oder aus sphärischen Metallpartikel und Metallflakes sich hervorragend als Lasermarkierungsadditiv in Kunststoffen eigenen, Die Eintrübung der Kunststoffe ist hierbei weniger ausgeprägt als bei der ausschließlichen Verwendung von Metallflakes.

Ohne durch eine Theorie in irgendeiner Form gebunden sein zu wollen, kann es sein, dass Metallflakes aufgrund ihrer Plättchenform eine höhere spezifische Oberfläche als vergleichbar großen sphärischen Metallpartikeln aufweisen. Damit einher geht eine höhere Effizienz bei der Absorption der Laserstrahlung und auch der nachfolgenden Wärmeabgabe an den Kunststoff. Mit diesen Eigenschaften einher geht jedoch eine ebenfalls eine stärkere Wechselwirkung mit sichtbarem Licht, was sich letztendlich in einem erhöhten Trübungsverhalten äußert.

Bei einer sphärischen Form der Metallpartikel wird einfallendes Licht im Unterschied zu den flächigen Metalleffektpigmenten nicht gerichtet reflektiert wird und insofern von einem Betrachter nicht als stark reflektierendes Pigment wahrgenommen wird. Vorteilhafterweise vermögen sphärische Metallpartikel das eingestrahlte Laserlicht ebenso wie Metallflakes in hohem Maße zu absorbieren und demzufolge in Wärme umzuwandeln,

Völlig überraschend wurde festgestellt, dass bei eher geringeren Anteilen der Metallflakes in der erfindungsgemäßen Mischung die vorteilhaften Eigenschaften der Metallflakes zur Wirkung kommen, ohne zu starke Eintrübungen im sichtbaren Bereich zu erhalten.

Das Wärmeabsorptionsvermögen von sphärischen Metallpartikeln und Metallflakes ist weitaus ausgeprägter als etwa bei Perlglanzpigmenten und daher kann die erfindungsgemäße Mischung bei weitaus geringeren Konzentrationen eingesetzt werden.

Prinzipiell können die zur Lasermarkierung verwendeten sphärischen Metallpartikel und Metallflakes einen weiten Korngrößenbereich aufweisen. Bevorzugt werden jedoch kleinere sphärische Metallpartikel und Metallflakes verwendet. Es hat sich überraschenderweise herausgestellt, dass die Abbildungsschärfe und insbesondere die Punktgenauigkeit der Lasermarkierung bei Verwendung kleinerer Metallpartikel besser werden. Die Punktgenauigkeit verschlechtert sich, wenn auch nur kleine Mengen zu großer sphärischer Metallpartikel oder Metallflakes vorhanden sind.

Unter Punktgenauigkeit versteht man eine gute Auflösung der Lasermarkierung ohne störende, vereinzelte große Punkte.

Mit der verbesserten Punktgenauigkeit und Abbildeschärfe geht einher, dass man die erfindungsgemäße zu verwendende Mischung mit oder aus sphärischen Metallpartikeln und Metallflakes auch bei wesentlich erhöhten Schreibgeschwindigkeiten mit guten Resultaten einsetzen kann.

Überraschenderweise hat sich herausgestellt, dass bei Verwendung einer Mischung mit oder aus sphärischen Metallpartikeln und Metallflakes ein synergistischer Effekt auftritt: So ergänzen sich die aus den anteilig-verwendeten sphärischen Metallpartikel zu erhaltenen Punktgenauigkeiten, Kontraste und Lasermarkierbarkeiten mit der durch die anteilig-verwendeten Metallflakes herrührende Flächeneffizienz bereits bei geringen Konzentrationen und ohne daher eine signifikante Eintrübung des Mediums zu erzeugen.

Durch diesen synergistischen Effekt kann die Menge an eingesetztem Material im Vergleich zu der ausschließlichen Verwendung der Einzelkomponenten zusätzlich reduziert werden, d.h. die erfindungsgemäß zu verwendende Mischung weist eine gesteigerte Effizienz auf.

Metallpartikel wie sphärische Partikel und Metallflakes besitzen eine Korngrößenverteilung, die gewöhnlicherweise ungefähr die Form einer log-Normalverteilung aufweist. Die Größenverteilung wird üblicherweise mittels Lasergranulometrie bestimmt.

Bei dieser Methode können die Metallpartikel in Form eines Pulvers vermessen werden. Die Streuung des eingestrahlten Laserlichtes wird in verschiedene Raumrichtungen erfasst und gemäß der Fraunhofer Beugungstheorie mittels der in Verbindung mit dem Helos-Gerät der Firma Sympatec, Deutschland, verwendeten Software Windox, Vers. 5, Release 5.1 gemäß Herstellerangaben ausgewertet. Dabei werden die Partikel rechnerisch als Kugeln behandelt. Somit beziehen sich die ermittelten Durchmesser stets auf den über alle Raumrichtungen gemittelte Äquivalentkugeldurchmesser, unabhängig von der tatsächlichen Form der Metallpartikel. Es wird die Größenverteilung ermittelt, die in Form eines Volumenmittels (bezogen auf den Äquivalentkugeldurchmesser) berechnet wird. Diese volumengemittelte Größenverteilung kann u.a. als Summendurchgangskurve dargestellt werden. Die Summendurchgangskurve wiederum wird meist vereinfachend durch bestimmte Kennwerte charakterisiert, z. B. den D₅₀- oder D₉₀-Wert. Unter einem D₉₀-Wert wird verstanden, dass 90 % aller Partikel unter dem angegebenen Wert liegen. Anders ausgedrückt, liegen 10 % aller Partikel oberhalb des angegebenen Wertes. Bei einem D₅₀-Wert liegen 50 % aller Partikel unter und 50 % aller Partikel oberhalb des angegebenen Wertes,

Im folgenden werden die Kennwerte der Summendurchgangskurve der Größenverteilung der erfindungsgemäßen zu verwendenden sphärischen Metallpartikeln und Metallflakes in der Mischung mit dem Suffix bzw. Index "Mischung" bezeichnet. Das Suffix bzw. der Index "Partikel" bezieht sich auf die sphärischen Metallpartikel und das Suffix bzw. der Index "Flake" auf die Metallflakes.

Die erfindungsgemäß zu verwendenden Mischungen weisen eine Korngrößenverteilung mit einem D_{Mischung, 90}-Wert von < 100 µm und einem D_{Mischung, 50}-Wert < 60 µm auf. Besonders bevorzugt weisen die erfindungsgemäß verwendeten Mischungen einen D_{Mischung, 50}-Wert im Bereich von 0,5 bis < 45 µm auf.

Bei zu groben Mischungen mit einer Korngrößenverteilung mit einem D_{Mischung, 90}-Wert von > 100 µm sind der gewünschte Kontrast und insbesondere die hohe Punktgenauigkeit der Lasermarkierung nicht gegeben und sehr stark beeinträchtigt. Gleiches gilt, wenn beispielsweise die Korngrößenverteilung der sphärischen Metallpartikel oder der Metallflakes einen D_{Mischung, 90}-Wert von < 100 µm aufweisen, jedoch der D_{Mischung, 50}-Wert > 60 µm ist. Derartige sphärische Metallpartikel oder Metallflakes besitzen einen geringeren Feinanteil und weisen nicht die in dieser Erfindung beschriebenen Vorteile auf.

Vorzugsweise ist der D_{Mischung, 80}-Wert von < 70 µm. Hiermit sind vorzugsweise Korngrößenverteilungen mit einem D_{Mischung, 50}-Wert von < 40 µm verbunden. Besonders bevorzugt weisen die erfindungsgemäß verwendeten Mischungen einen D_{Mischung, 50}-Wert im Bereich von 0,6 bis unter 40 µm auf. Bei Verwendung dieser feineren Metallpartikeln ist die Punktgenauigkeit der Lasermarkierung weiter verbessert, da sich die Punktgenauigkeit bereits durch kleine Mengen zu großer Metallpartikel oder -flakes verschlechtert. Optisch sichtbare, störende Partikel treten insbesondere bei Verwendung von groben sphärischen Metallpartikeln oder Metallflakes auf.

Die erfindungsgemäß verwendeten Metallflakes weisen hierbei bevorzugt eine Korngrößenverteilung D_{Flake, 50}-Wert in einem Bereich von 1 bis 60 µm auf, Besonders bevorzugt weisen die erfindungsgemäß verwendeten Metalllflakes einen D_{Flake, 50}-Wert im Bereich von 2 bis 40 µm auf.

Bei der anteiligen Verwendung von groben Metallflakes mit einem D_{Flake, 50}-Wert > 60 µm auf ist keine zufriedenstellende Punktgenauigkeit zu erzielen.

Je nach Mischungsverhältnis der beiden Metallpigmentkomponenten zueinander können die Größenverteilungen der einzelnen Komponenten differieren. So können bei einer sehr kleinen Beimengung von Metallflakes diese eine gröbere Struktur als die sphärischen Metallpartikel aufweisen. Werden ähnliche Mengen beider Komponenten vermischt, so sollten die auch die Größenverteilungen entsprechend ähneln.

Eine erfindungsgemäss zu verwendende Mischung aus sphärischen Metallpartikeln und Metallflakes besteht dabei vorzugsweise anteilig aus einem Gewichtsverhältnis von sphärischen Metallpartikeln zu Metallflakes von 500:1 bis 1:1.

Oberhalb eines Gewichtsverhältnisses von 500:1 von sphärischen Partikeln zu Metallflakes kann es sein, dass sich diese Mischung nicht mehr von der ausschließlichen Verwendung von sphärischen Partikeln unterscheiden läßt.

Oberhalb eines Gewichtsverhältnisses von 1:1 von Metallflakes zu sphärischen Metallpartikeln, beispielsweise bei einem Gewichtsverhältnis von 5:1, kann es sein, dass sich die Mischung nicht mehr wesentlich von der ausschließlichen Verwendung von Metallflakes unterscheiden läßt. In diesem Fall kann eine zu hohe Eintrübung des Kunststoffes erreicht werden.

Ein bevorzugtes Gewichtsverhältnis von sphärischen Metallpartikeln zu Metallflakes liegt im Bereich von 300:1 bis 1:1, weiter bevorzugt von 250:1 bis 1,5:1 und noch weiter bevorzugt von 100:1 bis 2:1. Weiterhin besonders bevorzugt wird ein Verhältnis im Bereich von 50:1 bis 2,5:1. Als sehr geeignet hat sich auch ein Gewichtsverhältnis von sphärischen Metallpartikeln zu Metallflakes im Bereich von 30:1 bis 3:1 erwiesen.

Neben mangelhafter Punktgenauigkeit ist insbesondere bei großen Metallflakes das Auftreten von optischen Glitzereffekten zu beobachten. Dies ist in der Anwendung meist ungewünscht und wird für die Erfindung als nachteilig angesehen. Bevorzugt werden erfindungsgemäß Metallflakes mit einem D_{Flake, 50}-Wert < 45 µm zugesetzt, um das Auftreten störender, glitzender Grobpartikel zu reduzieren. Der Effekt wird mit abnehmender Teilchengröße weiter reduziert, so dass weiter bevorzugt Metallflakes mit einem D _{Flake, 50}-Wert < 35 µm und in einer besonders bevorzugten Weise Metallflakes mit einem D _{Flake, 50}-Wert < 25 µm verwendet werden.

Bei einer bevorzugten Ausführungsform weist die Mischung mit oder aus sphärischen Metallpartikel und Metallflakes eine Korngrößenverteilung mit einem D_{Mischung, 80}-Wert von < 65 µm auf. Hierbei liegt vorzugsweise der D_{Mischung, 50}-Wert der Korngrößenverteilung bei < 35 µm. Besonders bevorzugt weist die erfindungsgemäß zu verwendende Mischung mit oder aus sphärischen Metallpartikel und Metallflakes einen D_{Michung, 50}-Wert im Bereich von 0,55 bis < 30 µm auf.

Derartige Mischungen weisen eine höhere Punktgenauigkeit und einen besseren Kontrast auf.

Besonders bevorzugt werden erfindungsgemäß verwendete Mischungen mit einer Korngrößenverteilung mit einem D_{Mischung, 90}-Wert von < 50 µm verwendet. Weiter vorzugsweise beträgt der D_{Mischung}, ₅₀-Wert der Korngrößenverteilung < 20 µm. Besonders bevorzugt weisen die erfindungsgemäß verwendeten Mischungen einen D_{Mischung, 50}-Wert im Bereich von 0,6 bis < 20 µm auf. Mit steigender Feinheit, d.h. mit abnehmender Korngröße der sphärischen Metallpartikel und/oder der Metallflakes, kann die Abbildungsschärfe und die Punktgenauigkeit der durch Lasermarkierung aufgebrachten Kennzeichnung oder Abbildung nochmals weiter gesteigert werden.

Besonders feine Größen an sphärischen Metallpartikeln und/oder Metallflakes bewirken eine ausgeprägt hohe Abbildungsschärfe, Punktgenauigkeit und Kontrast bei der Lasermarkierung.

Es wird vermutet, dass durch die Verwendung feiner sphärischer Metallpartikel und Metallflakes aufgrund deren hoher spezifischen Oberfläche die Laserlichtabsorption und nachfolgend die Energieabgabe in die Umgebung des Metallpartikels oder - flakes in besonders definierter, örtlich eng begrenzter Weise erfolgt. Daher weisen die Lasermarkierungen entsprechend pigmentierter Kunststoffe die genannten Vorteile auf.

Bei einer ganz besonders bevorzugten Ausführungsform werden erfindungsgemäß verwendete Mischungen mit einer Korngrößenverteilung mit einem D_{Mischung, 90}-Wert von < 25 µm verwendet. Bei diesen sphärischen Metallpartikeln ist vorzugsweise der D_{Mischung, 50}-Wert der Korngrößenverteilung < 11 µm. Besonders bevorzugt weisen die sphärischen Metallpartikel in der Mischung einen D_{Mischung, 50}-Wert im Bereich von 0,65 bis < 11 µm auf.

Gemäß einer bevorzugten Variante der Erfindung weisen die mittels Lasergranulometrie bestimmte Korngrößenverteilung der Metallflakes, in der Form der Volumen-gemittelten Summendurchgangskorngrößenverteilung, einen D_{Flake,50} aus einem Bereich von 1 bis 60 µm auf.

Bei diesen sehr feinen sphärischen Metallpartikeln bzw. Metallflakes wurde überraschenderweise gefunden, dass Lasermarkierungen mit hohem Kontrast und Punktgenauigkeit bei sehr hohen Schreibgeschwindigkeiten des Lasers erhalten werden können. Die Schreibgeschwindigkeiten des Lasers reichen von 10 bis ca. 20.000 mm/s, bevorzugt von 50 bis 15.000 mm/s, besonders bevorzugt von 100 bis 11.000 mm/s und ganz besonders bevorzugt von 200 bis 10.000 mm/s. Hierbei ist die im einzelnen erreichbare Schreibgeschwindigkeit abhängig von vielen Parametern, insbesondere jedoch von der Laserleistung und der Impulsfrequenz. Dies bringt im Hinblick auf die Durchsatzraten bei der Lasermarkierung von Objekten erhebliche Zeitvorteile mit sich.

Bei einer weiteren bevorzugten Ausführungsform weisen die sphärischen Metallpartikel in der Mischung eine Korngrößenverteilung mit kleineren Kennwerten, beispielsweise D₅₀- oder D₉₀-Werten, auf als die entsprechenden Kennwerte der Metallflakes in der Mischung.

Bevorzugt ist des Verhältnis der D₅₀₋Werte von sphärischen Metallpartikeln zu Metallflakes in der erfindungsgemäßen Mischung kleiner als 1,0, besonders bevorzugt kleiner als 0,75, weiter besonders bevorzugt kleiner als 0,5 und ganz besonders bevorzugt kleiner als 0,4.

Gemäß einer weiteren bevorzugten Ausführungsform der Erfindung weisen die in der erfindungsgemäßen Mischung eingesetzten sphärischen Metallpartikel und Metallflakes einen natürlichen Metalloxidgehalt von nicht mehr als 15 Gew.-%, bezogen auf das Gesamtgewicht der sphärischen Metallpartikel und Metallflakes auf, Weiterhin ist bevorzugt, dass der natürliche Metalloxidgehalt nicht mehr als 10 Gew.-%, und weiter bevorzugt nicht mehr als 5 Gew.-% beträgt. Als sehr geeignet hat sich ein natürlicher Metalloxidgehalt von etwa 0,3 bis 6 Gew.-% und besonders bevorzugt von 0,4 bis 1,5 Gew.-% erwiesen.

Die geringen natürlichen Metalloxidgehalte wirken sich vorteilhaft auf die schnelle Energieaufnahme des eingestrahlten Laserstrahlung durch die sphärischen Metallpartikel und Metallflakes auf. Die Untergrenze von 0,3 Gew.-% natürlicher Metalloxidgehalt ist durch die sich natürlich ausbildende Oxidschicht der Metalle bedingt.

Bei dem natürlichen Metalloxidgehalt der sphärischen Metallpartikel und Metallflakes kann es sich zum einen um eine oberflächlich gebildete Metalloxidschicht handeln. Beispielsweise weisen Aluminiumpartikel an der Oberfläche eine dünne Aluminiumoxidschicht auf.

Die sphärischen Metallpartikel und die Metallflakes der erfindungsgemäßen Mischung bestehen mithin vorzugsweise zu etwa 80 Gew.-%, weiter bevorzugt zu etwa 85 Gew.-%, weiterhin bevorzugt zu etwa 90 Gew.-%, noch weitere bevorzugt zu etwa 95 Gew.-% aus Metall, Vorzugsweise bestehen die Metallpartikel zu 98,5 bis 99,6 Gew,-% aus Metall, wobei sich diese Angaben jeweils auf das Gesamtgewicht aus Metall und natürlichem Metalloxid beziehen.

Unter einem natürlichen Metalloxidgehalt wird im Sinne der Erfindung der Gehalt des sich auf einem Metall durch Oxidation der Metalloberfläche ausbildenden Metalloxides verstanden.

Von dem natürlichen Metalloxid ist das Metalloxid zu unterscheiden, das in einem separaten Beschichtungsverfahren aufgebracht wird, wie weiter unten beschrieben wird. Bei dieser zusätzlich aufgebrachten Metalloxidschicht handelt es sich um eine anorganische Metalloxidschicht, bei der das Metall verschieden ist von dem Metall des beschichteten sphärischen Metallpartikels oder Metallflakes. In der Regel handelt es sich bei dieser anorganischen Metalloxidschicht um eine Siliziumoxid-, Titanoxid- und/oder Aluminiumoxidschicht.

Vorzugsweise enthalten die in der erfindungsgemäßen Mischung verwendeten sphärischen Metallpartikel und Metallflakes unabhängig voneinander Metalle oder bestehen aus Metallen, die aus der Gruppe, die aus Aluminium, Kupfer, Silber, Gold, Zink, Zinn, Eisen, Titan, Vanadium, Magnesium, Wolfram und Legierungen davon besteht, ausgewählt werden. Eine Legierung muss nicht notwendigerweise ausschließlich aus den vorgenannten Metallen bestehen. Es können auch weitere Metalle in Legierung mit den vorgenannten Metallen oder Legierungen davon vorliegen, beispielsweise auch in Form von Verunreinigungen.

Als sehr geeignete Metalle haben sich Aluminium, Silber, Kupfer, Zink und Eisen erwiesen. Ein Kunststoff, der diese Metalle nur in sehr geringen Konzentrationen, beispielsweise in einem Bereich von 0,0005 oder 0,001 Gew.-%, jeweils bezogen auf das Gesamtgewicht des Kunststoffs sowie der Metalle in Partikel- und Flakeform, enthält, läßt sich sehr gut mit einer Laser markieren, Eine geeignete Legierung ist beispielsweise Messing.

Aufgrund der mikroskaligen Korngrößenverteilung der Metallpartikel und Metallflakes weist das erfindungsgemäße Lasermarkierungsmittel eine äußerst hohe Punktgenauigkeit auf.

Nach Einstrahlung eines Laserstrahls in einen Kunststoff, der das erfindungsgemäß zu verwendende Lasermarkierungsmittel enthält, kommt es zu einer selektiven Erhitzung der mikroskaligen sphärischen Metallpartikel und -Metallflakes und daran anschließend zur Übertragung der Wärme auf den umgebenden Kunststoff. Die abgegebene Wärmebewirkt sodann einen thermisch induzierten Polymerabbau, was zu einer Carbonisierung und/oder zu einem Aufschäumen der die sphärischen Metallpartikel und Metallflakes umgebenden Polymere in der Kunststoffmatrix führt. In Abhängigkeit von der Art des verwendeten Polymers und/oder in Abhängigkeit von dem Energieeintrag durch den Laserstrahl kommt es zu einer Carbonisierung und/oder zu einem Aufschäumen.

Eine Carbonsierung führt zu einer Schwarzeinfärbung; ein Aufschäumen führt zu einer Aufhellung, die bis zu einer Art Weißeinfärbung führen kann.

In den meisten Fällen ist ein deutlicher Kontrast zum nichtmarkierten Kunststoff erwünscht, was am besten durch eine Carbonsierung erreicht werden kann.

Bei weiteren Ausführungsformen kann die durch den thermisch induzierten Polymerabbau hervorgerufene Änderung im Kunststoff so gering sein, dass sie nicht oder nur unwesentlich mit dem menschlichen Auge wahrgenommen werden kann. Derartige Markierungen können jedoch durch spezielle Lesegräte detektiert werden. Daher können derartige im wesentlichen unsichtbare Lasermarkierungen z.B. für Sicherheitsmarkierungen oder auf CD's Verwendung finden.

Weitere Ausführungsformen sehen eine gezielte Verfärbung des Kunststoffes durch Beimischung eines mit dem eingestrahlten laserlicht gezielt abbaubaren Farbmittels vor. So kann dieses Farbmittel sich unter Einwirkung des Laserlichtes zersetzen, wodurch der Kunststoff zusätzlich zur Schwarzfärbung oder Aufhellung farbloser wird. Wenn der Kunststoff weitere nicht durch das Laserlicht abbaubare Farbmittel enthält, kann der Kunststoff nach Einstrahlung des Laserlichtes und Zersetzung der gegenüber Laserlicht empfindlichen Farbmittel die Eigenfarbe der nicht durch Laserlicht abbaubaren Farbmittel annehmen.

Da die Carbonisierung und/oder das Aufschäumen nur lokal um die mikroskaligen Metallpartikel herum erfolgt, kann eine Markierung mit hoher Punktgenauigkeit erfolgen. Eine hohe Abbildungsschärfe macht sich unter anderem dadurch bemerkbar, dass ein Strich nicht als Ansammlung von einzelnen Punkten wahrgenommen wird, sondern als durchgehender gerader Strich, der aus einer Vielzahl kleiner, für das menschliche Auge nicht auflösbarer Punkte zusammengesetzt ist.

Es hat sich mithin als äußerst überraschend herausgestellt, dass - obwohl die Wechselwirkung der sphärischen Metallpartikel und der Metallflakes bei geringen Konzentrationen mit sichtbarem Licht nicht stark genug ist, um zu einer Vergrauung (Trübung) eines Kunststoffmaterials zu führen - die Wechselwirkung mit eingestrahltem Laserlicht jedoch ausreichend ist, um die gewünschte Carbonisierung und/oder das gewünschte Aufschäumen der die Metallpartikel umgebenden Polymermatrix zu erzeugen und mithin den Kunststoffgegenstand, mit einer kontrastreichen Kennzeichnung oder Markierung zu versehen.

Die mikroskaligen sphärischen Metallpartikel und Metallflakes der erfindungsgemäßen Mischung sind aufgrund ihrer sehr hohen Absorptionseigenschaften für elektromagnetische Strahlung vom UV- bis hin zum IR-Bereich sowie ihrer ausgezeichneten Wärmeleitfähigkeit besonders gut als Lasermarkierungs- und/oder Laserschweißbarkeitsmittel geeignet. Sie übertreffen herkömmliche metalloxidische Partikel in ihrer diesbezüglichen Wirksamkeit.

Die Mischung aus sphärischen Metallpartikeln und Metallflakes können in Form eines Pulvers dem Kunststoff zugegeben werden. Vorteilhafter ist jedoch die Zugabe der erfindungsgemäß zu verwendenden Mischung in Form eines Konzentrates oder Masterbatches. Es hat sich gezeigt, dass Konzentrate oder Masterbatche die Einarbeitbarkeit der Mischung aus sphärischen Metallpartikeln und Metallflakes in Kunststoffe erheblich erleichtert.

Ein Masterbatch im Sinne der vorliegenden Erfindung umfasst eine Mischung aus sphärischen Metallpartikeln und Metallflakes und mindestens einen Dispersionsträger.

Im Masterbatch liegt der Gehalt an sphärischen Metallpartikeln und Metallflakes in einem Bereich von 0,001 bis 99,9 Gew.-%, bezogen auf das Gesamtgewicht des Masterbatches. Bevorzugt beträgt der Gehalt an sphärischen Metallpartikeln und Metallflakes in dem Masterbatch in einem Bereich von 0,1 bis 95,0 Gew.-%, besonders bevorzugt von 0,5 bis 94 Gew.-% und weiter besonders bevorzugt von 1 bis 85 Gew.-%, jeweils bezogen auf das Gesamtgewicht des Masterbatches

Der Gehalt an sphärischen Metallpartikeln und Metallflakes in dem Masterbatch kann mithin sehr hoch sein, Der Gehalt kann in Abhängigkeit von dem Kunststoff und dem gewünschten Endgehalt in dem Kunststoff geeignet eingestellt werden.

Der Dispersionsträger kann mindestens eine Kunststoffkomponente, Wachse, Harze, Additive, Lösemittel und/oder Weichmacher umfassen.

Im Fall eines bei Raumtemperatur (18-25°C) festen Masterbatches umfasst der Dispersionsträger bevorzugt Kunststoffkomponenten, Wachse, Harze und/oder Additive.

Als Kunststoffkomponente wird dabei vorzugsweise ein Polymer verwendet, das mit dem Kunststoffmaterial, in das es eingearbeitet werden soll, verträglich ist. Gemäß einer bevorzugten Variante ist die in dem erfindungsgemäßen Masterbatch verwendete Kunststoffkomponente identisch mit dem Kunststoffmaterial, in das Lasermarkierungsmittel eingearbeitet werden soll.

Als Wachse werden bevorzugt Polyolefin-Abbauwachse oder Polyalkylenwachse, beispielsweise Polypropylenwachse, verwendet. Als Polypropylenwachs hat sich Licocene^{®}, Fa. Clariant, Schweiz, als sehr geeignet erwiesen.

Bevorzugte Harze, die im erfindungsgemäßen Masterbatch verwendet werden können, sind Phenolharze oder Ketonharze wie z.B. Laropal A81 der Fa. BASF.

Als Additive können dem Lasermarkierungsmittel Stabilisatoren, Tenside, Entschäumer, Dispergiermittel, Korrosionsinhibitoren, beispielsweise organische Phosphorsäuren oder Phosphonsäuren, und/oder oberflächenaktive Substanzen, etc. zugesetzt werden.

Die Additive können beispielsweise zu einer Verbesserung der Einarbeitbarkeit des Masterbatches in den Kunststoff führen. Durch die Additive wird eine Agglomeration oder Sedimentation der sphärischen Metallpartikel und Metallflakes im Masterbatch verhindert. Die Additive können mit den Partikeln der Mischung aus sphärischen Metallpartikeln und Metallflakes einfach zusammen gemischt werden bzw. die sphärischen Metallpartikel und Metallflakes der Mischung jeweils mit den Additiven beschichtet werden bzw. sein.

Gemäß einer weiteren bevorzugten Weiterbildung der Erfindung enthält der Masterbatch einen Gehalt an Additiv(en), der vorzugsweise in einem Bereich von 0,001 bis 20 Gew.-%, bezogen auf das Gesamtgewicht des Masterbatches, liegt. Gemäß einer weiteren bevorzugten Ausführungsform liegt der Gehalt an Additiv(en) in einem Bereich von 0,01 bis 10 Gew.-%, weiter bevorzugt in einem Bereich von 0,1 bis 4 Gew.-%, jeweils bezogen auf das Gesamtgewicht des Masterbatches.

Im Fall eines bei Raumtemperatur (18-25°C) flüssigen Masterbatches umfasst der Dispersionsträger bevorzugt Lösemittel und/oder Weichmacher. Als Lösemittel wird besonders bevorzugt Weißöl verwendet. Als Weichmacher werden Üblicherweise Phthalate, Adipate, Trimellitate, Sebazate, Weinsäurederivate, Zitronensäureester, Polyester, Phosphate und/oder Fettsäureester verwendet.

Bevorzugte Beispiele hierfür sind Bis-2-ethyloctyl-phthalat, Bis-2-ethylhexyl-adipat, Tri-2-ethylhexyl-trimellitat oder epoxidiertes Sojaöl.

Der Masterbatch kann weitere Komponenten wie beispielsweise Farbpigmente und/oder Farbstoffe enthalten.

Hinsichtlich der Konzentration der Mischung aus sphärischen Metallpartikeln und Metallflakes im Masterbatch sind zwei bevorzugte unterschiedliche Bereiche zu unterscheiden:

Bei dem ersten bevorzugten Bereich liegt der Gehalt an sphärischen Metallpartikeln und Metallflakes im Masterbatch bevorzugt in einem Bereich von 80 bis 99 Gew.-% und besonders bevorzugt von 85 bis 95 Gew.-%, jeweils bezogen auf das Gesamtgewicht des Masterbatches. In diesem Fall werden dem Masterbatch bevorzugt polymerverträgliche Lösemittel wie Weißöl und/oder Kunststoffkomponenten sowie Dispergiermittel zugegeben.

Der Gehalt der Kunststoffkomponente im Masterbatch liegt in diesem Fall vorzugsweise in einem Bereich von 0,5 bis 20 Gew.-%, weiter bevorzugt von 1 bis 15 Gew.-% und besonders bevorzugt von 2 bis 10 Gew.-%, jeweils bezogen auf das Gesamtgewicht des Masterbatches.

Bei dem zweiten bevorzugten Fall ähnelt der Masterbatch in seiner Zusammensetzung bereits sehr stark dem lasermarkierbaren Kunststoff, nur liegen die Komponenten in konzentrierterer Form vor.

Der Gehalt der Mischung an sphärischen Metallpartikeln und Metallflakes im Masterbatch liegt hier bevorzugt in einem Bereich von 0,001 bis 5 Gew,-% und besonders bevorzugt von 0,5 bis 2 Gew.-%, jeweils bezogen auf das Gesamtgewicht des Masterbatches.

Das Masterbatch enthält bei dem zweiten bevorzugten Fall überwiegend Kunststoffkomponenten.

Der Gehalt der Kunststoffkomponente im Masterbatch liegt in diesem Fall vorzugsweise in einem Bereich von 50 bis 99 Gew.-%, bevorzugt von 60 bis 98 Gew.-% und besonders bevorzugt von 70 bis 95 Gew.-%, jeweils bezogen auf das Gesamtgewicht des Masterbatches.

In diesem Fall wird das Masterbatch bevorzugt dem Kunststoff entweder vor dem Extrudieren beigemischt oder während des Extrudierens zudosiert.

Weiterhin enthält ein derartiger Masterbatch i.d.R. Additive und optional Wachse, Farbpigmente und/oder Farbstoffe.

Die Herstellung des Masterbatches erfolgt z.B. in einem geeigneten Mischer, beispielsweise einem Taumelmischer. Hierbei wird die Mischung aus sphärischen Metallpartikeln und Metallflakes sowie ggfs. weiteren Komponenten mit einem Kunststoffgranulat oder Kunststoffpulver bzw. Kunststoffausgangsmaterial in jeglicher Darreichungsform vermengt und nachfolgend beispielsweise extrudiert werden. Auch kann das Masterbatch hergestellt werden, indem die Mischung aus den sphärischen Metallpartikeln und Metallflakes sowie ggf. weiteren Komponenten direkt der Kunststoffschmelze beim Extrudieren zudosiert werden.

Da das erfindungsgemäß zu verwendende Lasermarkierungsmittel oder Laserschweißbarkeitsmittel bei einer bevorzugten Ausführungsform höhere Anteilen an sphärischen Metallpartikeln im Vergleich zu Metallflakes aufweist, kann die Vermischung mit Kunststoff(en) auch unter intensiven Bedingungen erfolgen. Eine Verformung der sphärischen Metallpartikel zu Plättchen, entsprechend den verwendeten Metallflakes, ist lediglich bei gröberen Partikeln zu beobachten. Die erhaltene Mischung aus Kunststoff und dem erfindungsgemäß zu verwendenden Lasermarkierungs- oder Laserschweißbarkeitsmittel kann dann direkt, beispielsweise in einem Extruder oder einer Spritzgießmaschine, weiter verarbeitet werden. Nach Erhalt des gewünschten Kunststoff-Formkörpers kann die Kennzeichnung mittels Laserstrahl durchgeführt werden.

Aufgrund der mikroskaligen Größe der in der erfindungsgemäßen Mischung enthalten Metallpartikel ist es sowohl aus Handhabungsgründen als auch aus Gesundheits- und Sicherheitsgründen bevorzugt, dass das erfindungsgemäße Lasermarkierungsmittel oder Laserschweißbarkeitsmittel oder ein Masterbatch davon in staubarmer, vorzugsweise nicht-staubender Präparation vorliegt.

Insofern liegt bei einer weiter bevorzugten Form das Masterbatch, enthaltend mindestens das Lasermarkierungsmittel oder Laserschweißbarkeitsmittel und die Kunststoffkomponente(n), in einer kompaktierten Form vor. Diese kompaktierte Form umfasst Granulate, Tabletten, Briketts, Würstchen oder Pellets. Der Lösemittelgehalt derartiger kompaktierter Formen liegt bei 0,0 bis 15 Gew-% und bevorzugt bei 0,001 bis 5 Gew.-% und weiter bevorzugt bei 0,0 bis weniger als 0,1 Gew.-%, jeweils bezogen auf das Gesamtgewicht der kompaktierten Form. Die Größe der kompaktierten Formen liegt dabei in einem Bereich von 50 µm bis 80 mm, vorzugsweise 200 µm bis 50 mm, weiter bevorzugten von 500 µm bis 25 mm. Eine sehr geeignete Größe der kompaktierten Formen des erfindungsgemäß zu verwendenden Lasermarkierungsmittels oder Laserschweißbarkeitsmittel oder des Masterbatches liegt in einem Bereich von 750 µm bis 10 mm, vorzugsweise in der Form von Granulat, Tabletten, Briketts, Würstchen oder Pellets.

Die Kompaktierung kann dabei durch Vermengen einer Mischung aus sphärischen Metallpartikeln und Metallflakes mit den Kunststoffkomponenten und optional einem weiteren Bindemittel und nachfolgendem Granulieren, Pelletieren, Tablettieren, Extrudieren, Komprimieren, etc. erfolgen. Hierbei wird unter Wärmeeintrag die Kunststoffkomponente aufgeschmolzen, die sich dann mit den sphärischen Metallpartikeln und Metallflakes verbindet. Nach Abkühlung bleibt die durch den jeweiligen Formgebungsprozeß erzeugte Form erhalten.

Bei einer weiteren Ausführungsform wird das Bindemittel in einem geeigneten Lösemittel gelöst und mit dem Lasermarkierungsmittel oder Laserschweißbarkeitsmittel und ggfs. anderen Additiven gemischt. Anschließend wird bei dieser Ausführungsform unter Rühren das Lösemittel bei Unterdruck und/oder erhöhter Temperatur wieder entfernt. Dadurch entstehen dreidimensionale unregelmäßige geformte Granulate. Bei einer weiteren Ausführungsform wird die Paste pelletiert oder tablettiert und anschließend getrocknet.

Die vorgenannten Darreichungsformen ermöglichen eine sichere Handhabung und Einarbeitung in einen Kunststoff, ohne Gefahr einer Metallstaubexplosion oder gesundheitlicher Beeinträchtigung.

Äußerst vorteilhaft bei der vorliegenden Erfindung ist, dass eine etwaige Trübung oder Graufärbung des Kunststoffs durch Zusatz von Farbmitteln ohne weiteres überdeckt werden kann. Im Stand der Technik sind die zuweilen auftretenden braunen oder grünlichen Einfärbungen kaum zu überdecken, da sie- im Unterschied zu einer leichten Trübung oder Vergrauung - eine Einfärbung darstellen.

Gemäß einer weiteren bevorzugten Ausführungsform der Erfindung sind die der erfindungsgemäßen Mischung enthaltenen Metallpartikel mit wenigstens einer anorganischen Metalloxidschicht versehen.

Die wenigstens eine anorganische Metalloxidschicht kann separat auf die Metallpartikel aufgebracht sein. Bspw. kann als Metalloxidschicht eine SiO₂-Schicht Al₂O₃ -Schicht oder TiO₂-Schicht aufgebracht sein. Es können auch Kombinationen von Metalloxidschichten, beispielsweise von zunächst SiO₂ und darauffolgend TiO₂ oder von zunächst TiO₂ und darauffolgend SiO₂ aufgebracht sein.

Derartige Beschichtungen haben keine Vorteile hinsichtlich der Lasermarkierbarkeit, können jedoch nötig sein, wenn der mit der erfindungsgemäßen Mischung pigmentierte Kunststoff korrodierenden Bedingungen ausgesetzt wird. So können beispielsweise Tiermarken mit dem Urin der Tiere in Berührung kommen.

Vorzugsweise wird als Metalloxidschicht eine SiO₂-Schicht aufgebracht. Die SiO₂-Schicht wird bevorzugt unter Verwendung von Sol-Gel-Verfahren aufgebracht.

Als Ausgangsverbindungen für die SiO₂-Schicht werden bevorzugt Tetraalkoxysilane verwendet. Beispiele hierfür sind: Tetramethoxysilan, Tetraethoxysilan, Tetrapropoxysilan, Tetraisopropoxysilan oder Tetrabutoxysilan oder Mischungen hieraus.

Das Tetraalkoxysilan wird unter Wasserzugabe in vorzugsweise basischem Milieu zunächst hydrolysiert und nachfolgend eine SiO₂-Schicht auf die Metallpartikel abgeschieden wird.

Zur Katalyse der SiO₂-Abscheidung werden vorzugsweise stickstoffhaltige Basen wie Ammoniak, Alkyl- oder Dialkylamine hinzugefügt. Geeignete Verbindungen sind Methylamin, Ethylamin, Dimethylamin, Diethylamin, Pyridin, Piperazin, etc..

Auf die sphärischen Metallpartikel und/oder Metallflakes kann gemäß einer weiteren bevorzugten Ausführungsform auch eine organisch-chemische Oberflächenmodifizierung aufgebracht sein. Zwischen sphärischen Metallpartikel und/oder Metallflakes und organisch-chemischer Oberflächenmodifizierung kann ferner eine Metalloxidschicht, beispielsweise SiO₂-Schicht, angeordnet sein.

Die organisch-chemische Oberflächenmodifizierung kann bei einer weiteren Variante eine die sphärischen Metallpartikel und/oder Metallflakes umhüllende organisch-chemische Polymermatrix sein. Diese wird bevorzugt durch gezielte Polymerisation aus Monomeren aus die Metallpartikel aufgebracht. Eine organisch-chemische Oberflächenmodifizierung kann eine verbesserte Anbindung, beispielsweise durch Ausbildung einer kovalenten Bindung zwischen sphärischem Metallpartikel und/oder Metallflake und den umgebenden Kunststoff, an den Kunststoff bewirken

Die der Erfindung zugrundeliegende Aufgabe wird ferner durch Bereitstellung eines lasermarkierbaren und/oder laserschweißbaren Kunststoffes gelöst, der eine gemäßden Ansprüchen 1 bis 11 zu verwendende Mischung mit sphärischen Metallpartikeln und Metallflakes enthält. Ferner kann der lasermarkierbare und/oder laserschweißbare Kunststoff einen erfindungsgemäßen Masterbatch gemäß einem der Ansprüche 12 bis 15 enthalten.

Der lasermarkierbare und/oder laserschweißbare Kunststoff umfasst vorzugsweise thermoplastische, duroplastische oder elastomere Kunststoffe. Besonders bevorzugt sind hierbei thermoplastische Kunststoffe.

Als thermoplastische Polymere kommen alle dem Fachmann bekannten Thermoplaste in Betracht. Geeignete thermoplastische Polymere werden beispielsweise im Kunststoff-Taschenbuch, Hrsg. Saechtling, 25. Ausgabe, Hanser-Verlag, München, 1992, insbesondere Kapitel 4 sowie darin zitierte Verweise, und im Kunststoff-Handbuch, Hrsg. G. Becker und D. Braun, Bände 1 bis 11, Hanser-Verlag, München, 1966 bis 1996, beschrieben.

Exemplarisch seien als geeignete Thermoplaste genannt Polyoxyalkylene, Polycarbonate (PC), Polyester wie Polybutylenterephthalat (PBT) oder Polyethylenterephthalat (PET), Polyolefine wie Polyethylen oder Polypropylen (PP), Poly(meth)acrylate, Polyamide, vinylaromatische (Co)polymere wie Polystyrol, schlagzähmodifiziertes Polystyrol wie HI-PS, oder ASA-, ABS- oder AES-Polymerisate, Polyarylenether wie Polyphenylenether (PPE), Polysulfone, Polyurethane, Polylactide, halogenhaltige Polymerisate, imidgruppenhaltige Polymere, Celluloseester, Silicon-Polymere und thermoplastische Elastomere. Es können auch Mischungen unterschiedlicher Thermoplaste als Materialien für die Kunststoffformteile eingesetzt werden. Bei diesen Mischungen kann es sich um ein- oder mehrphasige Polymerblends handeln.

Die zu beschriftenden oder miteinander zu verbindenden Kunststoffe können aus identischen oder verschiedenen Thermoplasten bzw. Thermoplast-Blends bestehen.

Polyoxyalkylenhomo- oder -copolymerisate, insbesondere (Co)polyoxymethylene (POM) und Verfahren zu deren Herstellung sind dem Fachmann an sich bekannt und in der Literatur beschrieben. Geeignete Materialien sind im Handel unter der Markenbezeichnung Ultraform^{®} (BASF AG, Deutschland) erhältlich. Ganz allgemein weisen diese Polymere mindestens 50 mol-% an wiederkehrenden Einheiten -CH₂O-in der Polymerhauptkete auf. Die Homopolymeren werden im allgemeinen durch Polymerisation von Formaldehyd oder Trioxan hergestellt, vorzugsweise in der Gegenwart von geeigneten Katalysatoren. Bevorzugt sind Polyoxymethylencopolymere und Polyoxymethylenterpolymerisate. Die bevorzugten Polyoxymethylen(co)polymere haben Schmelzpunkte von mindestens 150°C und Molekulargewichte (Gewichtsmittelwert) M im Bereich von 5.000 bis 200.000, vorzugsweise von 7.000 bis 150.000 g/mol. Endgruppenstabilisierte Polyoxymethylenpolymerisate, die an den Kettenenden C-C-Bindungen aufweisen, werden besonders bevorzugt.

Geeignete Polycarbonate sind an sich bekannt und sind z.B. gemäß DE-B-1 300 266 durch Grenzflächenpolykondensation oder gemäß DE-A-14 95 730 durch Umsetzung von Biphenylcarbonat mit Bisphenolen erhältlich. Bevorzugtes Bisphenol ist 2,2-Di(4-hydroxyphenyl)propan, im allgemeinen als Bisphenol A bezeichnet. Die relative Viskosität dieser Polycarbonate liegt im allgemeinen im Bereich von 1,1 bis 1,5, insbesondere von 1,28 bis 1,4 (gemessen bei 25°C in einer 0,5 gew.-%igen Lösung in Dichlormethan). Geeignete Polycarbonate sind im Handel unter der Markenbezeichnung Lexan^{®} (GE Plastics B.V., Holland) erhältlich.

Geeignete Polyester sind ebenfalls an sich bekannt und in der Literatur beschrieben, Sie enthalten einen aromatischen Ring in der Hauptkette, der von einer aromatischen Dicarbonsäure herrührt. Der aromatische Ring kann auch substituiert sein, z.B. durch Halogen wie Chlor und Brom oder durch C₁-C₄-Alkylgruppen wie Methyl-, Ethyl-, i-bzw. n-Propyl- und n-, i- bzw. tert.-Butylgruppen. Die Polyester können durch Umsetzung von aromatischen Dicarbonsäuren, deren Estern oder anderer esterbildender Derivate derselben mit aliphatischen Dihydroxyverbindungen in an sich bekannter Weise hergestellt werden. Als bevorzugte Dicarbonsäuren sind Naphthalindicarbonsäure, Terephthalsäure und Isophthalsäure oder deren Mischungen zu nennen. Bis zu 10 mol-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden. Von den aliphatischen Dihydroxyverbindungen werden Diole mit 2 bis 6 Kohlenstoffatomen, insbesondere 1,2-Ethandiol, 1,4-Butandiol, 1,8-Hexandiol, 1,4-Hexandiol, 1,4-Cyclohexandiol und Neopentylglykol oder deren Mischungen bevorzugt. Als besonders bevorzugte Polyester sind Polyalkylenterephthalate, die sich von Alkandiolen mit 2 bis 6 C-Atomen ableiten, zu nennen. Von diesen werden insbesondere Polyethylenterephthalat (PET), Polyethylennaphthalat und Polybutylenterephthalat (PBT) bevorzugt. Diese Produkte sind im Handel z.B. unter den Markenbezeichnungen Rynite^{®} (PET; Fa. DuPont, USA) bzw. Ultradur^{®} (PBT; BASF AG) erhältlich. Die Viskositätszahl der Polyester liegt im allgemeinen im Bereich von 60 bis 200 ml/g (gemessen in einer 0,5 gew.-%igen Lösung in einem Phenol/o-Dichlorbenzol-Gemisch (Gew.-Verh. 1:1 bei 25°C)).

Geeignete Polyolefine sind ganz allgemein Polyethylen und Polypropylen sowie Copolymerisate auf der Basis von Ethylen oder Propylen, ggf. auch mit höheren α-Olefinen. Entsprechende Produkte sind z.B. unter den Handelsnamen Lupolen^{®} bzw. Novolen^{®} erhältlich. Unter Polyolefinen sollen auch Ethylen-Propylen-Elastomere und Ethylen-Propylen-Terpolymere verstanden werden.

Unter den Poly(meth)acrylaten sind insbesondere Polymethylmethacrylat (PMMA) sowie Copolymere auf der Basis von Methylmethacrylat mit bis zu 40 Gew.-% weiterer copolymerisierbarer Monomeren, wie n-Butylacrylat, t-Butylacrylat oder 2-Ethylhexylacrylat, zu nennen, wie sie beispielsweise unter den Bezeichnungen Lucryl^{®} (BASF AG) oder Plexiglas^{®} (Röhm GmbH, Deutschland) erhältlich sind. Im Sinne der Erfindung sind hierunter auch schlagzähmodifizierte Poly(meth)acrylate sowie Mischungen aus Poly(meth)acrylaten und SAN-Polymerisaten, die mit Polyacrylatkautschuken schlagzäh modifizier sind (z.B. das Handelsprodukt Terlux^{®} der BASF AG), zu verstehen.

Als Polyamide sind solche geeignet mit aliphatischem teilkristallinen oder teilaromatischen oder amorphem Aufbau jeglicher Art und deren Blends, einschließlich Polyetheramiden wie Polyetherblockamiden. Unter Polyamiden sollen alle bekannten Polyamide verstanden werden. Geeignete Polyamide weisen im allgemeinen eine Viskositätszahl von 90 bis 350 ml/g, vorzugsweise 110 bis 240 mg auf (bestimmt in einer 0,5 gew.-%-igen Lösung in 96 gew.-%-iger Schwefelsäure bei 25°C gemäß ISO 307).

Halbkristalline oder amorphe Harze mit einem Molekulargewicht (Gewichtsmittelwert) von mindestens 5.000 g/mol, wie sie z.B. in den amerikanischen Patentschriften 2 071 250, 2 071 251, 2 130 523. 2 130 948, 2 241 322, 2 312 966, 2 512 606 und 3 393 210 beschrieben werden, sind bevorzugt. Beispiele hierfür sind Polyamide, die sich von Lactamen mit 7 bis 13 Ringgliedern ableiten, wie Polycaprolactam, Polycapryllactam und Polylaurinlactam, sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien Adipinsäure, Azelainsäure, Sebacinsäure, Dodecandisäure (= Decandicarbonsäure) und und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin, Di-(4-aminophenynmethan, Di-(4-aminocyclohexyl)-methan, 2,2-Di-(4-aminophenyl)-propan oder 2,2-Di- (4-aminocyclohexyl)-propan.

Bevorzugte Polyamide sind Polyhexamethylenadipinsäureamid (PA 66), z.B. das Handelsprodukt Ultramid^{®} A (BASF AG), und Polyhexamethylensebacinsäureamid (PA 610), z.B. das Handelsprodukt Nylon^{®} 610 (Fa, DuPont), Polycaprolactam (PA 6), z.B. das Handelsprodukt Ultramid^{®} B (BASF AG) sowie Copolyamide 6/66, insbesondere mit einem Anteil von 5 bis 95 Gew.-% an Caprolactam-Einheiten, z.B. das Handelsprodukt Ultramid^{®} C (BASF AG). PA 6, PA 66 und Copolyamide 6/66 sind besonders bevorzugt.

Außerdem seien auch noch Polyamide erwähnt, die z.B. durch Kondensation von 1,4-Diaminobutan mit Adipinsäure unter erhöhter Temperatur erhältlich sind (Polyamid-4, 6). Herstellungsverfahren für Polyamide dieser Struktur sind z.B. in den EP-A 38 094, EPA 38 582 und EP-A 39 524 beschrieben.

Weitere Beispiele sind Polyamide, die durch Copolymerisation zweier oder mehrerer der vorgenannten Monomeren erhältlich sind, oder Mischungen mehrerer Polyamide, wobei das Mischungsverhältnis beliebig ist.

Weiterhin haben sich solche teilaromatischen Copolyamide wie PA 6/6T und PA 66/6T als besonders vorteilhaft erwiesen, deren Triamingehalt weniger als 0,5, vorzugsweise weniger als 0,3 Gew.-% beträgt (siehe EP-A 299 444). Die Herstellung der teilaromatischen Copolyamide mit niedrigem Triamingehalt kann nach den in den EP-A 129195 und 129 196 beschriebenen Verfahren erfolgen.

Weitere geeignete thermoplastische Materialien stellen vinylaromatische (Co)polymere dar. Das Molekulargewicht dieser an sich bekannten und im Handel erhältlichen Polymeren liegt im allgemeinen im Bereich von 1.500 bis 2.000.000, vorzugsweise im Bereich von 70.000 bis 1.000.000 g/mol.

Nur stellvertretend seien hier vinylaromatische (Co)polymere aus Styrol, Chlorstyrol, α-Methylstyrol und p-Methylstyrol genannt; in untergeordneten Anteilen, vorzugsweise nicht mehr als 20, insbesondere nicht mehr als 8 Gew.-%, können auch Comonomere wie (Meth)acrylnitril oder (Meth)acrylsäureester am Aufbau beteiligt sein. Besonders bevorzugte vinylaromatische (Co)polymere sind Polystyrol, Styrol-Acrylnitril-Copolymere (SAN) und schlagzähmodifiziertes Polystyrol (HIPS = High Impact Polystyrene), Es versteht sich, dass auch Mischungen dieser Polymeren eingesetzt werden können. Die Herstellung erfolgt vorzugsweise nach dem in der EP-A-302 485 beschriebenen Verfahren.

Weiterhin sind ASA-, ABS- und AES-Polymerisate (ASA = Acrylnitril-Styrol-Acrylester, ABS = Acrylnitril-Butadien-Styrol, AES = Acrylnitril-EPDM-Kautschuk-Styrol) besonderes bevorzugt. Diese schlagzähen vinylaromatischen Polymere enthalten mindestens ein kautschukelastisches Pfropfpolymerisat und ein thermoplastisches Polymerisat (Matrixpolymerisat). Als Matrixmaterial wird im allgemeinen auf ein Styrol/Acrylnitril-Polymerisat (SAN) zurückgegriffen. Bevorzugt werden Pfropfpolymerisate verwendet, die als Kautschuk
- einen Dienkautschuk auf Basis von Dienen, wie z.B. Butadien oder Isopren, (ABS);
- einen Alkylacrylatkautschuk auf Basis von Alkylestern der Acrylsäure, wie n-Butylacrylat und 2-Ethylhexylacrylat, (ASA);
- einen EPDM-Kautschuk auf Basis von Ethylen, Propylen und einem Dien, (AES); oder Mischungen dieser Kautschuke bzw. Kautschukmonomeren enthalten.

Die Herstellung von geeigneten ABS-Polymerisaten findet sich z.B. in der deutschen Patentanmeldung DE-A 19728629 eingehend beschrieben. Für die Herstellung von ASA-Polymerisaten kann z.B. auf die EP-A 99 532 zurückgegriffen werden. Angaben über die Herstellung von AES-Polymerisaten sind beispielsweise in der US 3,055,859 oder in der US 4,224,419 offenbart. Auf die in diesem Absatz genannten Patentschriften wird hiermit ausdrücklich Bezug genommen.

Unter Polyarylenethern sind bevorzugt sowohl Polyarylenether an sich, Polyarylenethersulfide, Polyarylenethersulfone oder Polyarylenetherketone zu verstehen. Deren Arylengruppen können gleich oder verschieden sein und unabhängig voneinander einen aromatischen Rest mit 6 bis 18 C-Atomen bedeuten. Beispiele geeigneter Arylenreste sind Phenylen, Bisphenylen, Terphenylen, 1,5-Naphthylen, 1,6-Naphthylen, 1,5-Anthrylen, 9,10-Anthrylen oder 2,6-Anthrylen. Darunter werden 1,4-Phenylen und 4,4'-Biphenylen bevorzugt. Vorzugsweise sind diese aromatischen Reste nicht substituiert. Sie können jedoch einen oder mehrere Substituenten tragen. Geeignete Polyphenylenether sind unter der Bezeichnung Noryl^{®} (GE Plastics B.V., Holland) kommerziell erhältlich.

Im allgemeinen weisen die Polyarylenether mittlere Molekulargewichte M (Zahlenmittel) im Bereich von 10.000 bis 60.000 g/mol und Viskositätszahlen von 30 bis 150 ml/g auf. Die Viskositätszahlen werden je nach Löslichkeit der Polyarylenether entweder in 1 Gew.-%iger N-Methylpyrrolidon-Lösung, in Mischungen aus Phenol und o-Dichlorbenzol oder in 96%-iger Schwefelsäure bei jeweils 20°C bzw. 25°C gemessen.

Die Polyarylenether sind an sich bekannt oder können nach an sich bekannten Methoden hergestellt werden.

Bevorzugte Verfahrensbedingungen zur Synthese von Polyarylenethersulfonen oder -ketonen sind beispielsweise in der EP-A 113 112 und EP-A 135 130 beschrieben. Polyarylenethersulfone weisen in der Regel einen Schmelzpunkt von mindestens 320°C, Polyarylenetherketone von mindestens 370°C auf. Geeignete Polyphenylenethersulfone sind z.B. unter der Bezeichnung Ultrason^{®} E (BASF AG), geeignete Polyphenylenethterketone unter der Bezeichnung Victrex^{®} im Handel erhältlich.

Des weiteren sind Polyurethane, Polyisocyanurate und Polyharnstoffe geeignete Materialien für die Herstellung der Kunststoffformteile. Weiche, halbharte oder harte, thermoplastische oder vernetze Polyisocyanat-Polyadditionsprodukte, beispielsweise Polyurethane, Polyisocyanurate und/oder Polyharnstoffe, insbesondere Polyurethane, sind allgemein bekannt und im Handel u.a. unter der Bezeichnung Elastolan^{®} (Elastogran GmbH, Deutschland) erhältlich, Ihre Herstellung ist vielfältig beschrieben und erfolgt üblicherweise durch Umsetzung von Isocyanaten mit gegenüber Isocyanaten reaktiven Verbindungen bei allgemein bekannten Bedingungen. Bevorzugt wird die Umsetzung in Gegenwart von Katalysatoren und/oder Hilfsstoffen durchgeführt. Wenn es sich um geschäumte Polyisocyanat-Polyadditionsprodukte handelt, so werden diese in Gegenwart von üblichen Treibmitteln hergestellt.

Als Isocyanate kommen die an sich bekannten aromatischen, arylaliphatischen, aliphatischen und/oder cycloaliphatischen organischen Isocyanate, bevorzugt Diisocyanate in Frage.

Als gegenüber Isocyanaten reaktive Verbindungen können beispielsweise allgemein bekannte Verbindungen mit einem Molekulargewicht von 60 bis 10.000 g/mol und einer Funktionalität gegenüber Isocyanaten von 1 bis 8, bevorzugt 2 bis 6 eingesetzt werden (im Falle von thermoplastischen Polyurethanen TPU Funktionalität ca. 2), beispielsweise Polyole mit einem Molekulargewicht von 500 bis 10.000 g/mol, z.B. Polyetherpolyole, Polyesterpolyole, Polyetherpolyesterpolyole, und/oder Diole, Triole und/oder Polyole mit Molekulargewichten kleiner 500 g/mol.

Polylactide, also Polymere der Milchsäure, sind an sich bekannt oder können nach an sich bekannten Verfahren hergestellt werden. Neben Polylactid können auch Co- oder Blockcopolymere auf der Basis von Milchsäure und weiteren Monomeren verwendet werden. Meist werden lineare Polylactide eingesetzt. Es können aber auch verzweigte Milchsäurepolymerisate verwendet werden. Als Verzweiger können z.B. mehrfunktionelle Säuren oder Alkohole dienen.

Als geeignete halogenhaltige Polymerisate sind insbesondere Polymerisate des Vinylchlorids zu nennen, insbesondere Polyvinylchlorid (PVC) wie Hart-PVC und Weich-PVC, und Copolymerisate des Vinylchlorids wie PVC-U-Formmassen.

Weiterhin kommen fluorhaltige Polymere in Betracht, insbesondere Polytetrafluorethylen (PTFE), Tetrafluorethylen-Perfluorpropylencopolymere (FEP), Copolymere des Tetrafluorethylens mit Perfluoralkylvinylether, Ethylen-Tetrafluorethylen-Copolymere (ETFE) Polyvinylidenfluorid (PVDF), Polyvinylfluorid (PVF), Polychlortrifluorethylen (PCTFE), und Ethylen-Chlortrifluorethylen-Copolymere (ECTFE).

Imidgruppenhaltige Polymere sind insbesondere Polyimide, Polyetherimide, und Polyamidimide.

Geeignete Celluloseester sind etwa Celluloseacetat, Celluloseacetobutyrat, und Cellulosepropionat.

Daneben kommen auch Silicon-Polymere als Thermoplaste in Betracht. Geeignet sind insbesondere Siliconkautschuke. Dabei handelt es sich üblicherweise um Polyorganosiloxane, die zu Vernetzungsreaktionen fähige Gruppen aufweisen. Derartige Polymere werden beispielsweise in Römpp Chemie Lexikon, CD-ROM Version 1.0, Thieme Verlag Stuttgart 1995, beschrieben.

Schließlich kann auch die Verbindungsklasse der Thermoplastischen Elastomere (TPE) herangezogen werden. TPE lassen sich wie Thermoplaste verarbeiten, haben jedoch kautschukelastische Eigenschaften. Es sind TPE-Blockpolymere, TPE-Pfropfpolymere und segmentierte TPE-Copolymere aus zwei oder mehr Monomerbausteinen geeignet. Besonders geeignete TPE sind thermoplastische Polyurethanelastomere (TPE-U oder TPU), Styrol-Oligoblock-Copolymere (TPE-S) wie SBS (Styrol-Butadien-Styrol-oxyBlockcopolymer) und SEES (Styrol-Ethylen-Butylen-Styrol-Blockcopolymer, erhältlich durch Hydrieren von SBS), thermoplastische Polyolefin-Elastomere (TPE-O), thermoplastische Polyester-Elastomere (TPE-E), thermoplastische Polyamid-Elastomere (TPE-A) und insbesondere thermoplastische Vulkanisate (TPE-V). Einzelheiten zu TPE findet der Fachmann in G. Holden et al., Thermoplastic Elastomers, 2. Auflage, Hanser Verlag, München 1996.

In die vorgenannten thermoplastischen Kunststoffen lässt sich das erfindungsgemäß zu verwendende Lasermarkierungsmittel oder Laserschweißbarkeitsmittel hervorragend einarbeiten, beispielsweise zur Herstellung des erfindungsgemäßen Masterbatches oder einer direkt weiter zu verarbeitenden Kunststoff-Lasermarkierungsmittel Mischung.

Aus einer erhaltenen Kunststoff-Lasermarkierungsmittel-Mischung können dann durch thermisches Umformen die gewünschten Formkörper, bspw. Behälter wie Flaschen, Tassen, Schalen, oder Folien, etc. hergestellt werden.

Der erfindungsgemäße lasermakierbare und/oder laserschweißbare Kunststoff kann durch ein Verfahren hergestellt werden, bei dem die vorstehend beschriebene Mischung mit oder aus sphärischen Metallpartikeln und Metallflakes in das Kunststoffmaterial eingebracht werden. Die Mengen der eingebrachten sphärischen Metallpartikel und Metallflakes können in Abhängigkeit von Kunststoffen und/oder Verwendungszweck eingestellt werden. Die Einbringung der sphärischen Metallpartikel und Metallflakes in das Kunststoffmaterial kann in einem üblichen Mischer oder aber auch in einem Extruder auf herkömmliche Weise erfolgen.

Ein Verfahren zur Herstellung des lasermarkierbaren und/oder laserverschweißbaren Kunststoffs, bei dem die erfindungsgemäße Mischung aus sphärischen Metallpartikeln und Metallflakes in ein Kunststoffmaterial eingebracht werden, ist ebenfalls Gegenstand der vorliegenden Erfindung.

Gemäß einer bevorzugten Ausführungsform beträgt der Anteil der erfindungsgemäßen Mischung in dem lasermarkierbaren und/oder laserschweißbaren Kunststoff 0,0005 bis 0,8 Gew.-%, vorzugsweise 0,001 bis 0,5 Gew.-%, wobei sich die Angaben jeweils auf das Gesamtgewicht des Kunststoffs beziehen.

Überraschenderweise sind die vorteilhaften Eigenschaften des erfindungsgemäßen lasermarkierbaren- und/oder laserschweißbaren Kunststoffs schon mit sehr geringen Gehalten an Lasermarkierungsmittel erreichbar. Unterhalb von 0,0005 Gew.-% Lasermarkierungsmittel können die erfindungsgemäßen Vorteile nicht mehr oder nur noch sehr eingeschränkt festgestellt werden.

Weiterhin ist bevorzugt, dass der Anteil der Mischung aus sphärischen Metallpartikeln und Metallflakes in dem Kunststoff bei 0,005 bis 0,5 Gew.-%, noch weiter bevorzugt 0,01 bis 0,2 Gew.-%, jeweils bezogen auf das Gesamtgewicht des lasermarkierbaren Kunststoffs beträgt

Bei den verwendeten Metallen stellte sich heraus, dass in niedrigen Konzentrationen insbesondere Metallpartikel bestehend aus Aluminium, Silber, Kupfer, Zink oder Eisen die besten Ergebnisse brachten. Eine weitere bevorzugte Ausführungsform betrifft mithin Kunststoffe, die eine Mischung mit oder aus sphärischen Metallpartikeln und Metallflakes aus diesen Metallen oder Legierungen dieser Metalle, vorzugsweise in Konzentrationen von 0,0005 bis 0,015 Gew.-%, bezogen auf den gesamten Kunststoff, enthalten.

Die vorliegende Erfindung erlaubt es, mit einem Laserstrahl kontrastreich zu markierende oder zu beschriftende Kunststoffe herzustellen.

Ab einer Menge von 0,2 Gew.-%, bezogen auf das Gesamtgewicht des Kunststoffs, kann das Material opak werden. In einem Mengenbereich zwischen 0,05 Gew.-% und 0,2 Gew.-% kann eine erste Trübung auftreten, die sich mit zunehmender Konzentration zu einer gräulichen Einfärbung des Materials steigern kann. Oberhalb von 0,8 Gew.-% ist der Kunststoff in der Regel zu opak. Zudem ist kein weiterer Vorteil der Qualität der Lasermarkierbarkeit erkennbar. Somit würde die Verwendung von mehr Lasermarkierungsmittel nur unnötig die Herstellkosten des lasermarkierbaren Kunststoffs steigem.

Der Gehalt an der Mischung mit oder aus sphärischen Metallpartikeln und Metallflakes im Kunststoff kann im Einzelfall in Abhängigkeit der Schichtdicke des zu markierenden Materials eingestellt werden, wobei vorzugsweise der Gehalt an der erfindungsgemäß zu verwendenden Mischung mit oder aus sphärischen Metallpartikeln und Metallflakes mit abnehmender Schichtdicke des Kunststoffes erhöht werden kann.

Die verwendete Menge der Mischung mit oder aus sphärischen Metallpartikeln und Metallflakes ist abhängig von der Dicke und Opazität des Kunststoffes. Der Gehalt der Mischung mit oder aus sphärischen Metallpartikeln und Metallflakes in dem Kunststoff wird dabei vorzugsweise so gewählt, dass eine gute Lasermarkierbarkeit gegeben ist bei gleichzeitig möglichst hoher Transparenz des Kunststoffes. So wird man bei dickeren Kunststoffen eher geringere Mengen der Mischung mit oder aus sphärischen Metallpartikeln und Metallflakes zusetzen und bei dünneren Kunststoffen eher höhere Mengen. Ist der Kunststoff durch weitere Farbmittel eingefärbt, so wird die Vergrauung durch die Mischung mit oder aus sphärischen Metallpartikeln und Metallflakes relativ gering ausfallen und es können höhere Mengen zugesetzt werden. Im einzelnen ist die optimale Menge der einzusetzenden Mischung mit oder aus sphärischen Metallpartikeln und Metallflakes ohne weiteres ermitteln. Hierbei ist auch der Art des eingesetzten Lasers sowie die Wellenlänge des Laserlichts zu berücksichtigen.

Bei dünneren Kunststoffe, die üblicherweise eine Schichtdicke von 50 bis 250 µm aufweisen, werden bevorzugt 0,05 bis 0,5 Gew.-% der Mischung mit oder aus sphärischen Metallpartikel und Metallflakes eingesetzt. Bei dickeren Kunststoffe, die üblicherweise eine Schichtdicke von über 250 µm bis 10 cm aufweisen, werden bevorzugt 0,0005 bis 0,05 Gew.-% der Mischung mit oder aus sphärischen Metallpartikel und Metallflakes eingesetzt.

So liegt die Schichtdicke einer Folie üblicherweise in einem Bereich von 20 µm bis ca. 5 mm. Die Dicke von spritzgegossenen Kunststoffen kann bis zu ca. 6 cm betragen.

Im Falle einer Folie kann der Gehalt an sphärischen Metallpartikeln und Metallflakes im Vergleich zu einem Kunststoffformkörper erhöht sein. Beispielsweise kann bei einem Kunststoffformkörper ein Gehalt von 0,005 Gew.-% der erfindungsgemäß zu verwendenden Mischung mit oder aus sphärischen Metallpartikel und Metallflakes verwendet werden, wohingegen bei einer Folie ein Gehalt von 0,02 Gew.-% der erfindungsgemäß zu verwendenden Mischung mit oder aus sphärischen Metallpartikel und Metallflakes geeignet sein kann. Der geeignete Gehalt der Mischung mit oder aus sphärischen Metallpartikeln und Metallflakes kann anhand von Versuchen vom Fachmann ohne weiteres ermittelt werden.

Eine kontrastreiche Markierung eines Kunststoffs ist-wie in den Beispielen gezeigt wird - schon mit einer Konzentration erfindungsgemäßer Mischung von 0,001 Gew.-% möglich. Die Konzentrationsangaben in Gew,-% beziehen sich dabei jeweils auf das Gesamtgewicht des Materials und der sphärischen Metallpartikeln sowie Metallflakes.

Vorzugsweise liegt bei einer Schichtdicke des Kunststoffs in einem Bereich von 20 µm bis 500 µm der Anteil der Mischung mit oder aus sphärischen Metallpartikeln und Metallflakes in einem Bereich von 0,005 bis 0,2 Gew.-%, weiter bevorzugt von 0,02 bis 0,05, jeweils bezogen auf das Gesamtgewicht aus Kunststoff und sphärischen Metallpartikeln sowie Metallflakes.

Bei einer Schichtdicke des Kunststoffs im Bereich von 500 µm bis 2 mm liegt der Anteil der Mischung mit oder aus sphärischen Metallpartikeln und Metallflakes vorzugsweise in einem Bereich von 0,001 bis 0,1 Gew.-%., weiter bevorzugt von 0,005 bis 0,05, jeweils bezogen auf das Gesamtgewicht aus Kunststoff und sphärischen Metallpartikeln sowie Metallflakes.

Es wurde völlig überraschend festgestellt, dass -wie in den Beispielen gezeigt wird - ein Kunststoff, der sphärische Metallpartikel und Metallflakes mit einer Menge in einem Bereich von 0,001 bis zu 0,05 Gew.-% enthält, vollkommen transparent ist und zugleich hervorragend mit einem Laserstrahl kontrastreich markiert werden kann. Vorzugsweise wird in einem Konzentrationsbereich von 0,01 bis 0,04 Gew.-% sphärischen Metallpartikeln und Metallflakes gearbeitet.

Die äußerst geringe Menge an zu verwendendem Lasermarkierungsmittel bietet gleich mehrere Vorteile. So werden die Materialeigenschaften des Kunststoffmaterials nicht bzw. nicht wesentlich durch den Zusatz des erfindungsgemäßen Lasermarkierungsmittels beeinflusst.

Bei der erfindungsgemäßen Verwendung einer Mischung mit oder aus sphärischen Metallpartikeln und Metallflakes in einem Bereich von 0,001 bis 0,05 Gew.-% in einem transparenten oder klaren Kunststoffmaterial kommt es mithin zu keiner bzw. zu keiner wesentlichen Verschlechterung der Transparenz bzw. der Farbeigenschaften des mit dem Lasermarkierungsmittel der vorliegenden Erfindung dotierten Materials, wobei jedoch überraschenderweise ein kontrastreiches Markieren oder Kennzeichnen mit einem Laserstrahl möglich ist.

Darüber hinaus ermöglicht die vorliegende Erfindung die äußerst preisgünstige Bereitstellung eines Kunststoffmaterials, da das Lasermarkierungsmittel aus preisgünstigen Materialien hergestellt und nur in geringem Umfang dem zu markierenden Material zugesetzt werden muss. Dies ist ein wesentlicher wirtschaftlicher Vorteil der vorliegenden Erfindung.

Mit diesen geringen Mengen zugesetzter Lasermiarkierungsmittels unterscheidet sich die vorliegende Erfindung sehr von anderen kommerziell eingesetzten Mitteln wie beispielsweise Lazerflair^{®} der Fa. Merck (Deutschland). Hier werden typischerweise höhere Mengen im Bereich 0,1 - 0,3 Gew.-% verwendet. Dabei wird der Kunststoff aufgrund der Transparenz des Pigments auch nicht wesentlich getrübt, jedoch ist die Verwendung großer Mengen unvorteilhaft. Zudem ist durch den Gehalt von Schwermetallen in diesen Pigmenten einen unnötige Gefährdung gegeben.

Es ist für bestimmte Anwendungen vorteilhaft, wenn der erfindungsgemäße Kunststoff im wesentlichen keine Perlglanzpigmente enthält. Die Nachteile von Perlglanzpigmenten in lasermarkierbaren Kunststoffen wurden weiter oben bereits ausgeführt: Perlglanzpigmente können zu einer farblichen Veränderung und zu einem Perlglanzeffekt führen. Dieser ist in gewissen Fällen aus dekorativen Gründen gewünscht, in vielen Fällen soll jedoch das Lasermarkierungsmittel die farblichen Eigenschaften des Kunststoffs nicht beeinflussen, d.h. das Lasermarkierungsmittel muss transparent sein. Der Kunststoff selbst soll ebenfalls farblos transparent oder auch monochrom eingefärbt sein (z.B. blau, rot, gelb, usw.). Eine dekorative Einfärbung durch Perlglanz ist in diesen Fällen nicht erwünscht.

Daher sollen die erfindungsgemäßen Kunststoffe Pengtanzpigmente maximal in Mengen enthalten, in denen sie noch transparent wirken und praktisch keine Fließlinien verursachen. Demgemäß können die erfindungsgemäßen lasermarkierbaren und/oder laserschweißbaren Kunststoffe Perlglanzpigmente in Konzentrationen von 0 bis 0,1 Gew.-%, bevorzugt von 0,0 bis 0,05 Gew.-% bezogen auf den gesamten Kunststoff, enthalten. Die genauen Konzentrationen, ab denen die nachteiligen Eigenschaften der Perlglanzpigmente nicht mehr beobachtet werden, hängen natürlich von weiteren Parametern wie insbesondere der Schichtdicke des Kunststoffs ab, können vom Fachmann jedoch ohne weiteres ermittelt werden.

Besonders bevorzugt enthalten derartige erfindungsgemäße lasermarkierbare und/oder laserschweißbare Kunststoffe keine Perlglanzpigmente. Vorzugsweise werden mithin bei der vorliegenden Erfindung keine Perlglanzpigmente verwendet. Somit enthält auch der Masterbatch vorzugsweise keine Perlglanzpigmente.

Die erfindungsgemäßen lasermarkierbaren und/oder laserschweißbaren Kunststoffe können weiterhin übliche Zusatzstoffe enthalten. Diese Zusatzstoffe können beispielsweise aus der Gruppe, die aus Füllstoffen, Additiven, Weichmachern, Gleit- oder Entformungsmitteln, Schlagzähigkeitsverbesserern, Farbpigmenten, Farbstoffen, Flammschutzmitteln, Antistatika, Optischen Aufhellern, Antioxidantien, antimikrobiell wirksame Biostabilisatoren, Chemischen Treibmitteln oder organischen Vemetzungsmitteln sowie andere Zusatzstoffen oder deren Mischungen davon besteht, ausgewählt werden.

Beispiele für verwendbare Füllstoffe sind: CaCO₃ (z.B. Omya, Köln; Ulmer Füllstoff Vertrieb), Dolomit (z.B. Ziegler, Wunsiedel; Blancs Mineraux de Paris), CaSO₄ (US Gypsum, Chicago), Silikate (Degussa, Frankfurt; Quarzwerke, Frechen), Glaskugeln (Potter; GB; Owens Corning, Wiesbaden), Talkum (Norwegian Talc; Nordbayrische Farben- und Mineralwerke, Hof), Kaolin (AKW, Hirschau; Luh, Walluf), Glimmer (Norwegian Talc; Dorfner, Hirschau), Feldspat (Omya, Paris), Silikatkugeln (Langer, Ritterhude), Silica (siehe Silikate), BaSO₄ (Sachtleben, Duisburg; Scheruhn, Hof), Al₂O₃ oder Al(OH)₃ (beide: Martinswerk, Bergheim).

Die Additive können beispielsweise Dispergieradditive, Antioxidantien, Metalldesaktivatoren und/oder Licht- und UV-Schutzmittel umfassen.

Geeignete Antioxidantien (Wärmestabilisatoren) sind etwa sterisch gehinderte Phenole, Hydrochinone, Arylamine, Phosphite, verschiedene substituierte Vertreter dieser Gruppe, sowie deren Mischungen. Sie sind etwa als Topanol^{®},(ICI, London) Irgafos^{®}, Irganox^{®} , (beide Ciba-Geigy, Basel), Hostanox^{®} (Clariant, Frankfurt) oder Naugard^{®} (Uniroyal, GB) im Handel erhältlich.

Beispiele für verwendbare Metalldesaktivatoren sind: Carbonsäureamide, Hydrazone, Hydrazine, Melaminderivate, Benzotriazole, Phosphonsäureester und/oder Thiazolderivate.

Beispiele: Hostanox (Clariant, Frankfurt), Irganox (Ciba Geigy, Basel), Naugard (Uniroyal, GB).

Beispiele für verwendbare Licht- und UV-Schutzmittel sind: Benzophenone, Benzotriazole, org. Ni-verbindungen, Salizylsäureester, Cyanzimtsäureester, Benzylidenmalonate, Benzoesäureester, Oxalanilide und/oder sterisch gehinderte Amine, die monomer und polymer sein können.

Beispiele: Chimasorb, Tinuvin (beide Ciba-Geigy, Basel), Cyasorb (American Cyanamid), Hostavin (Clariant, Frankfurt), Uvinul (BASF, Ludwigshafen).

Beispiele für verwendbare Weichmacher sind: Phthalsäureester, Phosphorsäureester, Adipinsäureester, Azelainsäureester, Glutarsäureester, Sebazinsäureester, Fettsäureester, vorzugsweise Oleate, Stearate, Rizinolate, Laurate und/oder Octoate, mit Pentaerythritol, Glykolen, Glyzerin u.s.w., epoxidierte Fettsäureester, Zitronensäureester, Polyester, Benzoesäureester, Trimellithsäureester, Sulfonsäureester, Sulfamide, Anilide, Polymerisate, Polykondensate, Polyethylenglykole, Abietinsäureester und/oder Derivate, Ester der Essig-, Propion-, Butter-, Ethylbutter- und/oder Ethylhexansäure.

Beispiele: Carbowax (DOW, Belgien), Cetamoll (BASF, Ludwigshafen), Edenol (Henkel, Düsseldorf), Elvaloy (DuPont de Nemours, USA), Lankroflex, (Lankro, GB), Palamoll, Palatinol (beide BASF, Ludwigshafen).

Beispiele für verwendbare Gleitmittel sind: Fettalkohole, Dicarbonsäureester, Fettsäuren des Glyzerins und anderer kurzkettiger Alkohole, Fettsäuren, Fettsäureamide, Metallsalze von Fettsäuren, oligomere Fettsäureester, Fettalkohol-Fettsäureester, Wachssäuren und deren Ester und Seifen, polare Polyethylenwachse und Folgeprodukte, unpolare Polyolefinwachse, natürliche und synthetische Paraffine, Siliconöle und/oder Fluorpolymere.

Beispiele: Licowax, Ceridust, Licolub, Licomont (alle Clariant, Frankfurt), Irgawax (Ciba-Geigy, Basel), Loxiol (Henkel, Düsseldorf), Bärolub (Bärlocher, München).

Beispiele für verwendbare Schlagzähigkeitsverbesserer sind: Elastomere (EPM bzw. EPDM, Polyacrylate, Polybutadien, Textilglasfasern, Aramidfasern und/oder Kohlenstofffasem.

Die Farbmittel können anorganische Pigmente und/oder organische Pigmente und/oder organische Farbstoffe umfassen. Es werden jedoch im wesentlichen keine Periglanzeffektpigmente verwendet.

Beispiele für verwendbare Flammschutzmittel sind: Geeignete Flammschutzmittel sind z.B. die dem Fachmann bekannten halogenhaltigen Verbindungen, allein oder zusammen mit Antimontrioxid, oder phosphorhaltige Verbindungen, Magnesiumhydroxid, roter Phosphor, sowie andere gebräuchliche Verbindungen oder deren Mischungen. Unter bekannte Flammschutzmittel fallen z.B. die in der DE-A 196 326 75 oder die in der Encyclopedia of Chemical Technology, Hrsg. R. Kirk und D. Othmer, Vol. 10, 3. Aufl., Wiley, New York, 1980, Seiten 340 bis 420, offenbarten Phosphorverbindungen, wie Phosphate, z.B. Triarylphosphate wie Triskresylphosphat, Phosphite, z.B. Triarylphosphite, oder Phosphonite. Als Phosphonite werden in der Regel Bis-(2,4-di-tert.butylphenyl)-phenylphosphonit, Tris- (2,4-di-tert.butylphenyl) -phosphonit, Tetrakis-(2,4-di-tert.butyl-6-methylphenyl)-4,4'-biphenylylen-diphosphonit, Tetrakis-(2,4-di-tert.butylphenyl)-4,4'-biphenylylendiphosphonit, Tetrakis-(2,4-di-methylphenyl)-1,4-phenylylen-diphosphonit, Tetrakis-(2,4-di-tert.butylphenyl)-1,6-hexylylen- diphosphonit und/oder Tetrakis-(3,5-di-methyl-4-hydroxyphenyl)-4,4' -biphenylylen-diphosphonit, Tetrakis-(3,5-di-tert.butyl-4-hydroxy-phenyl)-4,4'-biphenylylen-diphosphonit verwendet. Beispiele: Fire Fighters (Great Lakes Chemicals), Fyrol (Dead Sea Bromine, Israel, Martinal (Martinswerk, Bergheim), Reofos (Ciba-Geigy, Basel), Phosflex (Akzo Chemicals, USA).

Beispiele für verwendbare Antistatika sind: Ethoxylierte Fettamine, aliphatische Sulfonate, quartäre Ammoniumverbindungen und/oder polare Fettsäureester. Beispiele: Bärostat (Bärlocher, München), Dehydat (Henkel, Düsseldorf), Hostastat (Clariant, Frankfurt), Irgastat (Ciba-Geigy, Basel).

Beispiele für verwendbare optische Aufheller sind: Bis-Benzotriazole, Phenylcumarinderivate, Bis-styrylbiphenyle und/oder Pyrentriazine, Beispiele: Hostalux (Clariant, Frankfurt), Uvitex (Ciba-Geigy, Basel).

Beispiele für verwendbare antimikrobiell wirksame Biostabilisatoren sind: 10,10'-(Oxy-bis-phenoxarsin, N-(Trihalogenmethylthio-)phthalimid, Diphenylantimon-2-ethylhexanoat, Cu-8-hydroxychinolin, Tributylzinnoxid und/oder deren Derivate Beispiele: Cunilate (Ventron, B), Preventol (Bayer, Leverkusen), Fungitrol (Tenneco, USA).

Beispiele für verwendbare chemische Treibmittel sind: Azodicarbonamid und Derivate, Hydrazin-Derivate, Semicarbazide, Tetrazole. Benzoxazine und/oder Zitronensäure+NaHCO₃.

Beispiele: Hydrocerol 8 (Böhringer, Ingelheim), Porofor (Bayer, Leverkusen), Genitron (Schering, GB).

Beispiele für verwendbare organische Vernetzungsmittel sind: Diaralkylperoxide, Alkylaralkylperoxide, Dialkylperoxide, tert.-Butylperoxybenzoat, Diacylperoxide und/oder Peroxyketale.

Beispiele: Interox (Peroxidchemie, Höllriegelskreuth), Luperco, Luperox (Luperox, Günzburg).

Gemäß einer bevorzugten Variante der vorliegenden Erfindung ist der lasermarkierbare und/oder laserschweißbare Kunststoff eine Kunststofffolie oder ein Etikett, vorzugsweise ein Klebeetikett.

Üblicherweise werden Produkte, auch Lebensmittel, mit transparenten Kunststofffolien umhüllt.

Eine unter Verwendung der vorliegenden Erfindung hergestellte Kunststofffolie ermöglicht mithin eine berührungslose und unveränderliche Beschriftung oder Kennzeichnung. Die Beschriftung oder Kennzeichnung der Kunststofffolie kann sowohl vor als auch nach Umhüllung des Produktes erfolgen.

Bei einer Variante der vorliegenden Erfindung liegt der Kunststoff als Etikett, vorzugsweise als Klebeetikett, vor. Bei Produkten, die nicht mit einer Kunststofffolie, sondern lediglich mit einem Klebeetikett versehen werden, bietet die Ausgestaltung des Kunststoffs in Form eines Klebeetiketts ebenfalls die Möglichkeit, die Etiketten unter Verwendung eines Laserstrahls zu beschriften bzw. zu kennzeichnen.

Gemäß einer weiteren Ausführungsform der vorliegenden Erfindung liegt der Kunststoff als dreidimensionaler Kunststoffkörper, vorzugsweise als Kunststoffbehälter vor. Auf den Kunststoffbehälter kann bspw. die maximale Haltbarkeit von Lebensmitteln, Chemikalien, Medikamenten, etc. angegeben werden.

Der dreidimensionale Kunststoffkörper kann auch bspw. in Form eines Datenträgers wie einer CD, DVD, CD-ROM, etc. ausgebildet sein. Anhand einer abriebfesten und unveränderlichen Kennzeichnung können Original von Fälschungen unterschieden werden. Der dreidimensionale Kunststoffkörper kann bspw. auch ein Blisterstrip sein, in dem üblicherweise Medikamente in Tabletten oder Kapselform vertrieben werden. Beispielsweise können Etiketten oder Kunststoffe, insbesondere Kunststoffbehälter, mittels Laserstrahl mit einem Barcode versehen werden.

In weiteren erfindungsgemäßen Ausführungsformen kann der lasermarkierbare und/oder laserschweißbarer Kunststoff ein Bestanteil eines Gegenstandes, der selbst nicht lasermarkierbar und/oder laserschweißbar sein muss, sein.

Die Beschriftung mit einem handelsüblichen Laser erfolgt derart, dass ein Probenkörper in den Strahlengang eines Lasers gebracht wird. Die erhaltene Markierung wird durch die Bestrahlungszeit (bzw. Pulszahl bei Pulslasern) und Bestrahlungsleistung des Lasers sowie des Kunststoffsystems, bestimmt Die Leistung der verwendeten Laser hängt von der jeweiligen Anwendung ab und kann im Einzelfall vom Fachmann ohne weiteres ermittelt werden.

Prinzipiell sind alle üblichen Laser geeignet, beispielsweise Gaslaser und Festkörperlaser. Gaslaser sind z.B. (in Klammem ist die typische Wellenlänge der emittierten Strahlung angegeben):
CO₂-Laser (10,6 µm), Argon-Gaslaser (488 nm und 514,5 nm), Helium-Neon-Gaslaser (543 nm, 632,8 nm, 1150 nm), Krypton-Gaslaser (330 bis 360 nm, 420 bis 800 nm), Wasserstoff-Gaslaser (2600 bis 3000 nm) und Stickstoff-Gaslaser (337 nm).

Festkörperlaser sind z.B. (in Klammern die typische Wellenlänge der emittierten Strahlung):
Nd:YAG-Laser (Nd³⁺Y₃Al₅O₁₂) (1064 nm) Hochleistungsdioden-Laser (800 bis 1000 nm), Rubinlaser (694 nm), F₂-Excimerlaser (157 nm), ArF-Excimerlaser (193 nm), KrCl-Excimerlaser (222 nm), KrF-Excimerlaser (248 nm) XeCl-Excimerlaser (308 nm), XeF-Excimerlaser (351 nm) sowie frequenzvervielfachte Nd:YAG-Laser mit Wellenlängen von 532 nm (frequenzverdoppelt), 355 nm (frequenzverdreifacht) oder 266 nm (frequenzvervierfacht).

Bevorzugte Laser für Laserbeschriftungen sind der Nd:YAG-Laser (Nd³⁺Y₃Al₅O₁₂) (1064 nm).
Für die Laserschweißbarkeit ist bevorzugt der Nd:YAG-Laser (Nd³⁺Y₃Al₅O₁₂) (1064 nm) sowie der Hochleistungsdioden-Laser (800 bis 1000 nm), die beide im kurzwelligen Infrarot emittieren.

Die verwendeten Laser werden üblicherweise bei Leistungen von 1 bis 400, bevorzugt 5 bis 100 und insbesondere 10 bis 50 Watt betrieben.

Die Energiedichten der eingesetzten Laser liegen im allgemeinen im Bereich von 0,3 mJ/cm² bis 50, J/cm² vorzugsweise 0,3 mJ/cm² bis 10 J/cm². Bei der Verwendung von gepulsten Lasern liegt die Pulsfrequenz im allgemeinen im Bereich von 1 bis 30 kHz. Entsprechende Laser, die vorliegend verwendet werden können, sind kommerziell erhältlich.

Ein sehr großer Vorteil des erfindungsgemäßen Lasermarkierungsmittels ist, dass die Wellenlänge des Laserstrahls nicht spezifisch auf die sphärischen Metallpartikel und Metallflakes der Mischung eingestellt werden muss. Metalle haben im Unterschied zu Metalloxiden ein breites Absorptionsvermögen, weshalb unterschiedlichste Laser mit verschiedenen Wellenlängen zur Lasermarkierung eines mit dem erfindungsgemäßen Lasermarkierungsmaterial dotieren Kunststoffs verwendet werden können.

Im Stand der Technik werden teilweise Metalloxide wie Antimon-dotiertes Zinnoxid als Absorbermaterialien verwendet. Ungeachtet der toxikologischen Risiken erfordern diese Oxide die Verwendung einer definierten Wellenlänge an Laserlicht, um eine Markierung bewirken zu können, was in der Handhabung aufwendig ist.

Die Verwendung eines mit dem erfindungsgemäßen Lasermarkierungsmittel dotierten Kunststoffs kann auf allen Gebieten erfolgen, wo bisher übliche Druckverfahren zur Beschriftung von Kunststoffen eingesetzt werden. Beispielsweise können Formkörper aus mit dem erfindungsgemäßen LasermarKierungsmittel dotiertem Kunststoff in der Elektro-, Elektronik- und Kraftfahrzeugindustrie Anwendung finden. Die Kennzeichnung und Beschriftung von z.B. Kabeln, Leitungen, Zierleisten bzw. Funktionsteilen im Heizungs-, Lüftungs- und Kühlbereich oder Schalter, Stecker, Hebel und Griffe, die aus mit dem erfindungsgemäßen Lasermarkierungsmittel dotierten Kunststoff bestehen, können selbst an schwer zugänglichen Stellen mit Hilfe von Laserlicht markiert werden.

Weiterhin können mit dem erfindungsgemäßen Lasermarklerungsmittel dotierte Kunststoffsysteme bei Verpackungen im Lebensmittelbereich oder im Spielzeugbereich eingesetzt werden. Die Markierungen auf den Verpackungen zeichnen sich insbesondere dadurch aus, dass sie wisch- und kratzfest, stabil bei nachträglichen Sterilisationsprozessen, und hygienisch rein beim Markierungsprozess aufbringbar sind.

Ein weiteres wichtiges Anwendungsgebiet für die Laserbeschriftung sind Kunststoffmarken zur individuellen Kennzeichnung von Tieren, sogenannte Cattle Tags oder Ohrmarken. Über ein Barcodesystem werden die Informationen gespeichert, welche spezifisch dem Tier zugehörig sind. Diese können bei Bedarf wieder mit Hilfe eines Scanners abgerufen werden. Die Beschriftung muss sehr dauerhaft werden, da die Ohrmarken teilweise über mehrere Jahre an den Tieren verbleiben.

Lasermarkierbare Kunststoffe umfassen Thermoplaste, Duroplaste, Elastomere oder Kautschuk.

Laserschweißbare Kunststoffe umfassen naturgemäß stets Thermoplaste.

In einer weiteren Ausführungsform werden die Lasermarkierungsmittel in Kunststoffen zur Laser-Innengravur zur Erzeugung zwei- oder dreidimensionaler Bildstrukturen verwendet. Laser-Innengravurverfahren sind beispielsweise in der DE 10 2005 011 180 A1 beschrieben. Eine Mischung von sphärischen Metallpulvern und Metallflakes, die für diese Zwecke besonders geeignet sind, umfassen eine Korngrößenverteilung mit einem D₉₀-Wert von kleiner als 20 pm verwendet. Bei diesen sphärischen Metallpartikel ist vorzugsweise der D₅₀-Wert der Korngrößenverteilung von kleiner als 11 µm, bei den Metallflakes ist der D₅₀-Wert der Korngrößenverteilung vorzugsweise < 10 µm.

Die vorliegende Erfindung wird anhand der nachfolgenden Beispiele veranschaulicht, ohne jedoch darauf beschränkt zu sein.

### Erfindungsgemäßes Beispiel 1:

Eine Mischung aus sphärischen Aluminiumpartikeln (Fa. ECKART GmbH, Fürth, Deutschland) mit einem D_{Partikel, 50}-Wert von 1,6 µm, einem D_{Partikel, 80}-wert von 3,4 µm (bestimmt mittels Lasergranulometrie mit Gerät Helos, Fa. Sympatec, Deutschland) und Aluminiumflakes (Chromal XV, Fa, ECKART GmbH, Fürth, Deutschland) mit einem D_{Flake, 50}-Wert von 5,0 µm wurde mit thermoplastischem Polypropylen (PP) (R 771-10; Fa. DOW, Deutschland, Wesseling) im Spritzgussverfahren zu Platten (Fläche 42 x 60 mm, Dicke 2 mm) verarbeitet.

### Zur Herstellung einer 1,0 Gew.-%-igen Mischung wurde wie folgt verfahren;

495 g Polypropylen-Granulat und 5 g eines Gemisches aus sphärischen Aluminiumpartikeln und pulverförmigen Aluminiumflakes (bestehend aus 95 Gew.-% sphärischen Partikeln und 5 Gew.-% Flakes) mit einem D_{Mischung, 50}-Wert von 2,5 µm und einem D_{Mischung, 90}-Wert von 10.5 µm wurden in einem Taumelmischer vermischt und nachfolgend in einem Doppelschneckenextruder (Fa. Bersdorff, Deutschland, Durchmesser 25 mm, 28L/D) ohne Zugabe weiterer Additive bei einer Verarbeitungstemperatur von ca. 230 °C zu einem Granulat verarbeitet. Dieses Granulat wurde anschließend mittels Spritzgießmaschine (Arburg Allrounder 221-55-250) bei der jeweiligen stoffspezifischen Verarbeitungstemperatur (z.B. PP 260 °C) zu den Muster-Plättchen mit den oben genannten Abmessungen verarbeitet.

In analoger Verfahrensweise wurden Konzentrationsreihen unter Zusatz von jeweils 1,0 Gew.-%, 0,5 Gew.-%, 0,2 Gew.-%, 0.1 Gew.-% 0,05 Gew.-%, 0.02 Gew.-%, 0,01 Gew.-%, 0,005 Gew.-% und 0,002 Gew.-% der Mischung aus sphärischen Aluminiumpartikeln und Aluminiumflakes (bestehend aus 95 Gew.-% sphärischen Partikeln und 5 Gew.-% Flakes) in Polypropylen gefertigt, wobei sich die Gewichtsangabe jeweils auf das Gesamtgewicht aus Polypropylen und sphärischen Aluminiumpartikeln sowie Aluminiumflakes bezieht, und die jeweils erhaltenen Plättchen mit einem Nd:YAG-Laser (Wellenlänge: 1064 nm; Leistung: 8 W, Impulsfrequenz: 5 KHz; Schreibgeschwindigkeiten: 50 - 350 mm/s) beschriftet. Die Angaben in Gew.-% beziehen sich dabei auf das Gesamtgewicht von Aluminiumpartikeln und PP.

Bei Verwendung einer Mischung aus sphärischen Aluminiumpartikeln und Aluminiumflakes (bestehend aus 95 Gew.-% sphärischen Partikeln und 5 Gew.-% Flakes) konnten ab einer Menge von 0,002 Gew.-% zu PP kontrastreiche, dunkle und abriebfeste Markierungen erhalten werden, die eine exzellente Randschärfe und Punktgenauigkeit aufwiesen. Die PP-Platten blieben dabei transparent und farbneutral.

Bei einem Gehalt einer Mischung aus sphärischen Aluminiumpartikeln und Aluminiumflakes in einem Bereich von 0,05-0,2 Gew.-% wurde zunehmend eine gräuliche Einfärbung festgestellt, die mit einem Verlust an Transparenz einherging. PP-Platten mit einem Gehalt an sphärischen Aluminiumpartikeln und Aluminiumflakes von mehr als 0,2 Gew-% waren grau-opak.

Es konnten keinerlei störenden Grobpartikel oder Flitter beobachtet werden. Zudem waren hierbei bereits in niedrigen Konzentrationsbereichen (0,005-0,02 Gew.-%) bei höheren Schreibgeschwindigkeiten (250-350 mm/s, 8 W, Impulsfrequenz: 5 KHz.) des Lasers exzellente Punktgenauigkeiten und hohe Kontraste gewährleistet.

### Vergleichsbeispiel 2:

Als Vergleichsbeispiel wurden PP-Platten ohne Zusatz einer Mischung aus sphärischen Aluminiumpartikeln und Aluminlumflakes analog zu Beispiel 1 im Spritzguss verarbeitet und mit einem Nd:YAG-Laser behandelt.

Die so erhaltenen PP-Platten waren praktisch nicht mit dem Laser markierbar.

### Vergleichsbeispiel 3:

Sphärische Aluminiumpartikel (Fa. ECKART) mit einem D_{Partikel, 50}-Wert von 39,3 µm, einem D_{Partikel, 90}-Wert von 69,1 µm (bestimmt mit dem Helos-Gerät wie in Beispiel 1) wurden in Entsprechung zu Beispiel 1 mit Polypropylen (PP) verarbeitet.

Bei Mengen in einem Bereich von 0,005-0,1 Gew.-% sphärischer Aluminiumpartikelin PP, jeweils bezogen auf das Gesamtgewicht an PP und sphärischen Aluminiumpartikeln, konnten kontrastreiche, dunkle und abriebfeste Markierungen erhalten werden, die eine gute Punktgenauigkeit aufwiesen.

Der Kontrast, die Randschärfe waren im Vergleich zu Beispiel 1 bereits signifikant reduziert.

Die PP-Platten blieben transparent und farbneutral. Bei Mengen in einem Bereich von 0,1-1,0 Gew.-% sphärischer Aluminiumpartikel wurde zunehmend eine gräuliche Einfärbung festgestellt, die mit einem Verlust an Transparenz einherging. PP-Platten mit einem Gehalt an sphärischen Aluminiumpartikeln von mehr als 1,0 Gew-% waren grau-opak.

Über den gesamten Konzentrationsbereich wurden optisch störende Grobpartikel beobachtet, deren Einfluss auf das optische Erscheinungsbild mit steigender Konzentration zunehmend signifikanter wurde.

### Vergleichsbeispiel 4:

Feine Aluminiumflakes (PC 200, Fa. Eckart GmbH, Fürth, Deutschland) mit einem D_{Flake, 50}-Wert von 4,0 µm und einem D_{Flake, 90}-Wert von 10,0 µm (bestimmt mit dem Helos-Gerät wie in Beispiel 1) wurden mit Polypropylen analog zu Beispiel 1 verarbeitet.

Bei Zusatz von ≥0,005 Gew.-% an Aluminiumflakes ließen sich Markierungen erhalten. Dabei wiesen die PP-Platten bereits bei diesem Gehalt an Aluminiumflakes eine Grautrübung auf. Bei einer Menge von 0,01 Gew.-% Aluminiumflakes war die Grautrübung vergleichbar mit der in Beispiel 1 bei einem Gehalt von ≥0,1% Gew.-% erhaltenen Grautrübung. Die Platten waren bereits bei einem Pigmentgehalt von nur 0,02 Gew.-% Aluminiumflakes grau-opak. Damit ist das unerwünschte Eintrübungsverhalten signifikant höher als bei der in Beispiel 1 aufgeführten Pigmentmischung.

Die Markierungen waren kontrastreich, dunkel und abriebfest, zeigte jedoch im Vergleich zu Beispiel 1 eine verminderte Punktgenauigkeit. Zudem waren die bei der ausschließlichen Verwendung plättchenförmigen Aluminiumflakes in der Kunststoffmasse durch Spritzgießen auftretenden typischen Fließlinien bzw. Schlieren signifikant zu beobachten,

### Erfindungsgemäßes Beispiel 5:

Eine Mischung aus sphärischen Aluminiumpartikeln (Fa. ECKART GmbH, Fürth, Deutschland) mit einem D_{Partilkel, 50}-Wert von 1,6 µm und einem D_{Partikel 90}-Wert von 3,4 µm (bestimmt mittels Lasergranulometrie mit Gerät Helos, Fa. Sympatec, Deutschland) und Aluminiumflakes (Chromal XV, Fa. ECKART GmbH, Fürth, Deutschland) mit einem D_{Flake, 50}-Wert von 5,0 µm wurden analog zu Beispiel 1 in Mischungsverhältnissen (Gewichtsanteile) von jeweils 500:1, 200:1, 100:5, 50:1, 30:1, 20:1, 10:1, 5:1, 3:1, 2:1 und 1:1 bei einer konstanten Konzentration von 0,02 Gew.-% der Pigmentmischung in Polypropylen verarbeitet.

Über den Mischungsbereich von sphärischen Aluminiumpartikeln zu Aluminiumflakes von 500:1 bis 10:1 ließen sich sehr kontrastreiche Markierungen mit exzellenter Punktgenauigkeiten auch bei erhöhten Schreibgeschwindigkeiten (350 mm/s) erhalten unter Erhalt der Transparenz. Bei einem Mischungsverhältnis 10:1 bis 1:1 war eine zunehmende Eintrübung zu beachten. Erst bei einem Mischungsverhältnis von 1:1 wurden die Platten grau-opak.

### Erfindungsgemäßes Beispiel 6:

Eine Mischung aus sphärischen Aluminiumpartikeln (Fa. ECKART GmbH, Fürth, Deutschland) mit einem D_{Partikel, 50}-Wert von 1,6 µm und einem D_{Paltikel, 90}-Wert von 3,4 µm und Aluminiumflakes (Chromal I, Fa. ECKART GmbH, Fürth, Deutschland) mit einem D_{Flake 50}-Wert von 30,5 µm, wurden analog zu Beispiel 5 in unterschiedlichen Mischungsverhältnissen (Gewichtsanteile) von jeweils 500:1, 200:1, 100:5, 50:1, 30:1, 20:1, 10:1, 5:1, 3:1, 2:1 und 1:1 bei einer konstanten Konzentration von 0,02 Gew.-% in PP verarbeitet.

Über den Mischungsbereich von sphärischen Aluminiumpartikeln zu Aluminiumflakes von 500:1 bis 1:1 ließen sich sehr kontrastreiche Markierungen mit exzellenten Punktgenauigkeiten auch bei erhöhten Schreibgeschwindigkeiten (350 mm/s) erhalten unter Erhalt der Transparenz. Bei einem Mischungsverhältnis von 1:1 nahm die Punktgenauigkeit etwas ab und auch Eintrübung und das Auftreten grober Partikel waren zu beobachten.

### Vergleichsbeispiel 7:

Glimmerplättchen mit Antimon-dotierter Zinnoxid-Beschichtung (Lazerflair^{®} 825, Fa. E. Merck KGaA, Deutschland) wurden mit PP in Entsprechung zu Beispiel 1 verarbeitet.

Die PP-Platten zeigten vergleichbare Eigenschaften zu den in Beispiel 1 erhaltenen PP-Platten. Jedoch waren hier Ober alle Konzentrationsbereiche zwar gute, aber im Vergleich zu den erfindungsgemäßen Beispielen verminderte Punktgenauigkeiten zu beobachten. Eine erste Trübung trat bei Konzentrationen von ≥0,1% Gew.-% ein und die PP-Platten wurde bei Konzentrationen von ≥2,0 Gew.-% opak.

Anstelle einer bei einem Aluminiumpartikelgehalt von ≥0,1 % Gew.-% in den erfindungsgemäßen Beispielen erhaltenen Graufärbung trat in analoger Weise bei den Lazerflair^{®} 825-Pigmenten eine grünliche Einfärbung auf. Das Pigment Lazerflair^{®} 825 enthält toxisches Antimon.

### Vergleichsbeispiel 8: (in Anlehnung an die EP 1 145 864 A1)

Analog zu Beispiel 1 wurde in Polypropylen (PP) ein silbernes Perlglanzpigment (PX1001, Fa. ECKART) in einer Konzentration von 0,49 Gew.-% verarbeitet. Hierbei konnten kontrastreiche, dunkle und abriebfeste Markierungen erhalten werden, die eine befriedigende bis ausreichende Randschärfe und Punktgenauigkeit aufwiesen. Die PP-Platten waren dabei jedoch perlglänzend-hell und opak.

### Vergleichsbeispiel 9: (in Anlehnung an die EP 1 145 864 A1)

Analog zu Beispiel 1 wurde in Polypropylen (PP) ein silbernes Perlglanzpigment (PX1001, Fa. ECKART) in einer Konzentration von 0,49 Gew.-% und Zink-Pulver, welches eine Korngrößenverteilung: D₁₀ = 1 ,9 µm; D₅₀ = 3,4 µm; D₈₀ = 6 µm aufwies (Zink-Staub 17640, Hersteller: Fa. Norzinko GmbH, Goßlar, Deutschland) in 0,0098 Gew.-% mit PP verarbeitet.

Die Ergebnisse entsprachen exakt den unter Vergleichsbeispiel 8 genannten.

### Vergleichsbeispiel 10:

Analog zu Beispiel 1 wurde Zink-Pulver (Zink-Staub 17640, Fa. Norzinko GmbH, Goßlar, Deutschland) mit Polypropylen (PP) verarbeitet.

Bei Verwendung des Zink-Pulvers ab einer Menge von 0,005% zu PP konnten kontrastreiche, dunkle und abriebfeste Markierungen erhalten werden, die eine befriedigende Randschärfe und Punktgenauigkeit aufwiesen. Ab Zusätzen von 0,05 Gew.-% wurden sehr gute Punktgenauigkeiten und Randschärfen erhalten. Die PP-Platten blieben dabei transparent und farbneutral.

Ab einem Gehalt an Zink-Pulver von 0,05 Gew.-% wurde zunehmend eine gräuliche Einfärbung festgestellt, die mit einem Verlust an Transparenz einherging. PP-Platten mit einem Gehalt an Zink-Pulver von mehr als 1,0 Gew-% waren grau-opak. Allerdings ließen sich nur gute Markierungen bei geringeren Schreibgeschwindigkeiten des Nd:YAG-Lasers (50 mm/s. 8 W, Impulsfrequenz: 5 KHz.) mit einer sehr guten Punktgenauigkeit und hohem Kontrast erreichen.

### Vergleichsbeispiel 11:

Analog zu Beispiel 1 wurde in Polypropylen (PP) ein silbernes Perlglanzpigment (PX1001, Fa. ECKART) in einer Konzentration von 0,05 Gew.-% und Zink-Pulver (Zink-Staub 17640, Fa. Norzinko GmbH, Goßlar, Deutschland) in einer Konzentration von 0,05 Gew.-% mit PP verarbeitet.

Die Ergebnisse waren vergleichbar mit den in Beispiel 10 angeführten, jedoch waren hierbei etwas verminderte Punktgenauigkeiten zu beobachten. Die Platten blieben bei den genannten Konzentrationen transparent.

Aus den vorstehenden Beispielen lässt sich zusammenfassen, dass die vorliegende Erfindung die Bereitstellung von lasermarkierbaren Kunststoffen ermöglicht, die transparent und zu gleich mit sehr gutem Kontrast und hoher Abbildungsschärfe und unter Verwendung geringer Mengen an Lasermarkierungsmittel mit einem Laser markierbar sind.

Eine sehr gute kontrastreiche Markierung ist in der Regel ab einem Gehalt von einer Mischung aus sphärischen Metallpartikeln und Metallflakes von 0,002 Gew.-%, bezogen auf das Gesamtgewicht der Kunststoffmasse und der sphärischen Metallpartikel sowie der Metallflakes, erhältlich, Eine Graufärbung oder Trübung erfolgt in der Regel ab einem Gehalt von sphärischen Metallpartikeln und Metallflakes, bei den Beispielen jeweils aus Aluminium, von 0,05 Gew.-%.

Aus dem Vergleichsbeispiel 2 ist ersichtlich, dass ohne Verwendung eines Lasermarkierungsmittel ein Kunststoff (hier Polyproplyen) praktisch nicht oder nur schwer markierbar ist.

Aus dem Vergleichsbeispiel 3 ist ersichtlich, dass sphärische Metallpulver eine Lasemarkierbarkeit ermöglichen, allerdings die Punktgenauigkeiten, Abbildeschärfe und Effizienz im Vergleich zur erfindungsgemäßen Mischung herabgesetzt ist.

Vergleichsbeispiel 4 zeigt, dass eine ausschließliche Verwendung von Metallflakes bereits bei sehr niedrigen Konzentrationen zu starken Eintrübungen und Opazität führt.

Die erfindungsgemäßen Beispiele 5 und 6 unterstreichen die Vorteile der bevorzugten Ausführungsformen, in denen insbesondere feine Metallpartikel Verwendung finden.

Vergleichsbeispiel 7 zeigt gute Ergebnisse zur Lasermarkierung allerdings unter Verwendung von Lasermarkierungsmitteln die toxisches Antimon enthalten.

Aus den Vergleichsbeispielen 8 bis 9 geht hervor, dass es bei Verwendung von Mischungen von Metallpulvem und Perlglanzpigmenten als Lasermarkierungsmittel zu einer verminderten Punktgenauigkeit und zu unerwünschten Einfärbungen bzw. Glanzeffekten kommt.

Die Ergebnisse der Vergleichsbeispiele 10 und 11 zeigen gegenüber jenen der Vergleichsbeispiele 8 und 9 deutlich die Vorteile bei Verwendung von Metallpartikeln ohne oder mit nur geringen Mengen an Perlglanzpigmenten auf. Die Markierungsergebnisse sind gleichwertig jedoch ohne Einfärbung der Matrix. Ein Zusatz von Perlglanzpigmenten zu Metallpulvem ist demzufolge nicht vorteilhaft.

In den nachstehenden erfindungsgemäßen Beispiel 12 und 14 sowie den Vergleichsbeispielen 13 und 15 wird die besondere Eignung der Mischung aus sphärischen Metallpartikeln und Metallflakes als Laserschweißbarkeitsmittel aufgezeigt.

### Beispiele zur Laserschweißbarkeit

### Erfindungsgemäßes Beispiel 12:

Eine Mischung aus sphärischen Aluminiumpartikeln (Fa. ECKART GmbH, Fürth, Deutschland) mit einem D_{Partikel, 50}-Wert von 1,6 µm und einem D_{Partikel, 90}-Wert von 3,4 µm (bestimmt mittels Lasergranulometrie mit Gerät Helos, Fa. Sympatec, Deutschland) und Aluminiumflakes (Chromal XV, Fa. ECKART GmbH, Fürth, Deutschland) mit einem D_{Flake, 50}-Wert von 5,0 µm (Mischung bestehend aus 95 Gew.-% sphärischen Partikeln und 5 Gew.-% Flakes, Gewichtsverhältnis 19:1, D_{Mischung, 50}-Wert von 2,5 µm, einem D_{Mischung, 50}-Wert von 10,5 µm) wurden mit einem Anteil von 0,05 Gew.-% mit thermoplastischem Polypropylen (R 771 -10; Fa. DOW, USA) im Spritzgussverfahren zu Platten (analog zu Beispiel 1, Fläche 42 × 60 mm, Dicke 1 mm) verarbeitet .

Eine so erhaltene Platte wurde mit einer entsprechenden Platte ohne Zusatz sphärischer Aluminiumpartikel und Aluminiumflakes aus thermoplatischen Polypropylen (R 771 - 10; Fa. DOW, USA) bedeckt und mittels eines Nd:YAG-Lasers (1064 nm; 8 W, Impulsfrequenz 5 KHz; Schreibgeschwindigkeit 50 mm/s) eine Fläche 10 x 10 mm bestrahlt. Dadurch konnte ein Verschmelzen der Platten an deren Kontaktfläche im bestrahlten Bereich herbeigeführt werden. Die Verschweißung konnte nur unter Kraftaufwendung wieder getrennt werden.

### Vergleichsbeispiel 13:

Analog Beispiel 12 wurden mit zwei Platten ohne Zusatz sphärischer Aluminiumpartikel und Aluminiumflakes aus thermoplastischen Polypropylen (R 771 -10; Fa. DOW, USA) verfahren. Es konnte jedoch keine Verschmelzung der Kunststoffplatten herbeigeführt werden.

### Erfindungsgemäßes Beispiel 14:

Eine Mischung aus sphärischen Aluminiumpartikeln (Fa. ECKART GmbH, Fürth, Deutschland) mit einem D_{Partikel, 50}-Wert von 1,6 µm, einem D_{Partikel, 90}-Wert von 3.4 µm (bestimmt mittels Lasergranulometrie mit Gerät Helos, Fa. Sympatec, Deutschland) und Aluminiumflakes (Chromal XV, Fa. ECKART GmbH, Fürth, Deutschland) mit einem D_{Flake, 50}-Wert von 5,0 µm (Mischung bestehend aus 95 Gew.-% sphärischen Partikeln und 5 Gew.-% Flakes, Gewichtsverhältnis 19:1, D_{Mischung, 50}-Wert von 2,5 µm, einem D_{Mischung, 90}-Wert von 10,5 µm) wurden mit einem Anteil von 0,5% Gew.-% mit Polyethylen niedriger Dichte (LDPE) (LDPE 410-E, Fa. DOW, USA) zu Blasfolien mit einer Dicke von 100 µm mittels einem Folienextruder Typ: Scientific, Fa LabTech, Thailand) verarbeitet. Ein Folienstück (110 x 70 mm) wurde mit entsprechend LDPE-Folie ohne Zusatz sphärischer Aluminiumpartikel und Aluminiumflakes bedeckt und analog zu Beispiel 20 behandelt. Dadurch konnte ein Verschmelzen der Folien an deren Kontaktfläche im bestrahlten Bereich herbeigeführt werden. Die Verschweißung konnte nur unter Kraftaufwendung und unter Zerstörung der Folien am Ort der Verschmelzung wieder getrennt werden.

### Vergleichsbeispiel 15:

Analog Beispiel 14 wurden mit zwei unpigmentierten Folien aus Polyethylen niedriger Dichte (LDPE) (LDPE 410-E, Fa. DOW, USA) verfahren. Es konnte jedoch keine Verschmelzung der Kunststofffolien herbeigeführt werden.

## Patentansprüche

1. Verwendung einer Mischung mit sphärischen Metallpartikeln und Metallflakes als Lasermarkierungs- oder Laserschweißbarkeitsmittel in einem Kunststoff,
**dadurch gekennzeichnet,**
**dass** die mittels Lasergranulometrie bestimmte Korngrößenverteilung der sphärischen Metallpartikel und Metallflakes in der Mischung, in der Form der Volumen-gemittelten Summendurchgangskomgrößenverteilung, einen D_{Mischung, 90}-Wert von < 100 µm und einen D_{Mischung, 50} < 60 µm aufweisen.

2. Verwendung einer Mischung mit sphärischen Metallpartikeln und Metallflakes als Lasermarkierungs- oder Laserschweißbarkeitsmittel nach Anspruch 1,
**dadurch gekennzeichnet,**
**dass** die sphärischen Metallpartikel und Metallflakes unabhängig voneinander weitgehend schwermetallfrei sind.

3. Verwendung einer Mischung mit sphärischen Metallpartikeln und Metallflakes als Lasermarkierungs- oder Laserschweißbarkeitsmittel nach Anspruch 1 oder 2,
**dadurch gekennzeichnet,**
**dass** der Anteil der sphärischen Metallpartikel und Metallflakes in dem Kunststoff in einem Bereich von 0,0005 bis 0,8 Gew.-%, vorzugsweise von 0,001 bis 0,5 Gew.-%, jeweils bezogen auf das Gesamtgewicht des Kunststoffs, liegt.

4. Verwendung einer Mischung mit sphärischen Metallpartikeln und Metallflakes als Lasermarkierungs- oder Laserschweißbarkeitsmittel nach einem der vorstehenden Ansprüche,
**dadurch gekennzeichnet,**
**dass** die mittels Lasergranulometrie bestimmte Korngrößenverteilung der sphärischen Metallpartikel und Metallflakes in der Mischung, in der Form der Volumen-gemittelten Summendurchgangskomgrößenverteilung, einen D_{Mischung, 90}-Wert von < 70 µm und einen D_{Mischung, 50}-Wert von < 40 µm aufweisen.

5. Verwendung einer Mischung mit sphärischen Metallpartikeln und Metallflakes als Lasermarkierungs- oder Laserschweißbarkeitsmittel nach einem der vorstehenden Anspruche,
**dadurch gekennzeichnet,**
**dass** die Volumen-gemittelte Summendurchgangskorngrößenverteilung der sphärischen Metallpartikel und Metallflakes in der Mischung einen D_{Mischung, 90}-Wert von < 65 µm und einen D_{Mischung, 50}-Wert von < 35 µm aufweisen.

6. Verwendung einer Mischung mit sphärischen Metallpartikeln und Metallflakes als Lasermarkierungs- oder Laserschweißbarkeitsmittel nach einem der vorstehenden Ansprüche,
**dadurch gekennzeichnet,**
**dass** die sphärischen Metallpartikel und/oder die Metallflakes Metalle enthalten oder aus diesen bestehen, die aus der Gruppe, die aus Aluminium, Kupfer, Silber, Gold, Zink, Zinn, Eisen, Titan, Vanadium, Magnesium, Wolfram und Legierungen davon besteht, ausgewählt wird.

7. Verwendung einer Mischung mit sphärischen Metallpartikeln und Metallflakes als Lasermarkierungs- oder Laserschweißbarkeitsmittel nach einem der vorstehenden Ansprüche,
**dadurch gekennzeichnet,**
**dass** die sphärischen Metallpartikeln und Metallflakes einen natürlichen Metalloxidgehalt von nicht mehr als 15 Gew-%, bezogen auf das Gesamtgewicht an sphärischen Metallpartikeln und Metallflakes, aufweisen.

8. Verwendung einer Mischung mit sphärischen Metallpartikeln und Metallflakes als Lasermarkierungs- oder Laserschweißbarkeitsmittel nach einem der vorstehenden Ansprüche,
**dadurch gekennzeichnet,**
**dass** die sphärischen Metallpartikel und/oder die Metallflakes mit wenigstens einer anorganischen Metalloxidschicht versehen sind.

9. Verwendung einer Mischung mit sphärischen Metallpartikeln und Metallflakes als Lasermarkierungs- oder Laserschweißbarkeitsmittel nach Anspruch 8
**dadurch gekennzeichnet,**
**dass** die Metalloxidschicht SiO₂ enthält oder aus SiO₂ besteht.

10. Verwendung einer Mischung mit sphärischen Metallpartikeln und Metallflakes als Lasermarkierungs- oder Laserschweißbarkeitsmittel nach einem der vorstehenden Ansprüche,
**dadurch gekennzeichnet,**
**dass** das Gewichtsverhältnis von sphärischen Metallpartikeln zu Metallflakes in einem Bereich von 500:1 bis 1:1 liegt.

11. Verwendung einer Mischung mit sphärischen Metallpartikeln und Metallflakes als Lasermarkierungs- oder Laserschweißbarkeitsmittel nach einem der vorstehenden Ansprüche,
**dadurch gekennzeichnet**
**dass** die mittels Lasergranulometrie bestimmte Komgrößenvelleilung der Metallflakes, in der Form der Volumen-gemittelten Summendurchgangskorngrößenverteilung, einen D_{Flake, 50} aus einem Bereich von 1 bis 60 µm aufweist.

12. Masterbatch,
**dadurch gekennzeichnet,**
**dass** der Masterbatch die gemäß den Ansprüchen 1 bis 11 zu verwendende Mischung mit sphärischen Metallpartikeln und Metallflakes sowie mindestens einen Dispersionsträger enthält.

13. Masterbatch nach Anspruch 12,
**dadurch gekennzeichnet**
**dass** der Dispersionsträger der Gruppe bestehend aus Kunststoffkomponenten, Wachse, Harze, Additive oder Mischungen hieraus, ausgewählt wird.

14. Masterbatch nach Anspruch 12 oder 13,
**dadurch gekennzeichnet,**
**dass** der Gehalt der sphärischen Metallpartikeln und Metallflakes im Masterbatch 80 bis 99 Gew.-%, bezogen auf das Gesamtgewicht des Masterbatches beträgt.

15. Masterbatch nach Anspruch 12 oder 13,
**dadurch gekennzeichnet,**
**dass** der Gehalt der sphärischen Metallpartikeln und Metallflakes im Masterbatch in einem Bereich von 0,001 bis 5 Gew.-%, bezogen auf das Gesamtgewicht des Masterbatch liegt.

16. Verwendung eines Masterbatches nach einem der Ansprüche 12 bis 15 zur Herstellung eines lasermarkierbaren und/oder laserschweißbaren Kunststoffs.

17. Lasermarkierbarer und/oder laserschweißbarer Kunststoff,
**dadurch gekennzeichnet,**
**dass** der Kunststoff eine gemäß einem der Ansprüche 1 bis 11 zu verwendende Mischung mit sphärischen Metallpartikeln und Metallflakes oder einen Masterbatch gemäß einem der Ansprüche 12 bis 15 enthält.

18. Lasermarkierbarer und/oder laserschweißbarer Kunststoff nach Anspruch 17,
**dadurch gekennzeichnet,**
**dass** der Anteil der sphärischen Metallpartikel und Metallflakes in dem Kunststoff in einem Bereich von 0,0005 bis 0,8 Gew.-%, vorzugsweise 0,001 bis 0,5 Gew.-%, jeweils bezogen auf das Gesamtgewicht des Kunststoffs liegt.

19. Lasermarkierbarer und/oder laserschweißbarer Kunststoff nach einem der Ansprüche 17 oder 18,
**dadurch gekennzeichnet**
**dass** der Anteil der sphärischen Metallpartikel und Metallflakes in dem Kunststoff in einem Bereich von 0,005 bis 0,5 Gew.-%, vorzugsweise von 0,01 bis 0,1 Gew.-%, jeweils bezogen auf das Gesamtgewicht des lasermarkierbaren Kunststoffs, liegt.

20. Lasermarkierbarer und/oder laserschweißbarer Kunststoff nach Anspruch 17,
**dadurch gekennzeichnet,**
**dass** der Kunststoff eine Kunststofffolie oder ein Etikett ist.

21. Lasermarkierbarer und/oder laserschweißbarer Kunststoff nach Anspruch 20,
**dadurch gekennzeichnet,**
**dass** der Kunststoff eine Kunststoffolie mit einem Anteil an sphärischen Metallpartikeln und Metallflakes in einem Bereich von 0,01 bis 1,0 Gew.-%,
vorzugsweise von 0,02 bis 0,5 Gew.-%, jeweils bezogen auf das Gesamtgewicht der lasermarkierbaren Kunststofffolie, aufweist.

22. Lasermarklerbarer und/oder laserschweißbarer Kunststoff nach einem der Ansprüche 17 bis 19.
**dadurch gekennzeichnet,**
**dass** der Kunststoff ein dreidimensionaler Kunststoffkörper ist.

23. Lasermarkierbarer und/oder laserschweißbarer Kunststoff nach einem der Ansprüche 17 bis 22,
**dadurch gekennzeichnet,**
**dass** der lasermarkierbare und/oder laserschweißbare Kunststoff ein Bestandteil eines Gegenstandes ist, der selbst nicht lasermarkierbar und/oder laserschweißbar sein muss.

24. Lasermarkierbarer Kunststoff nach einem der Ansprüche 17 bis 19,
**dadurch gekennzeichnet,**
**dass** der Kunststoff ein Thermoplast, Duroplast, Elastomer oder Kautschuk umfasst.

25. Laserschweißbarer Kunststoff nach einem der Ansprüche 17 bis 23,
**dadurch gekennzeichnet,**
**dass** der Kunststoff ein Thermoplast umfasst.

## Claims

1. Use of a mixture of spherical metal particles and metal flakes as a laser marking or laser weldability means in a plastic,
**characterised in that**
the grain size distribution of the spherical metal particles and metal flakes in the mixture measured by laser granulometry in the form of the volume-averaged, cumulative intensity profile of the grain size distribution has a D_{mixture, 90} value of < 100 µm and a D_{mixture, 50} value of 60 µm.

2. Use of a mixture of spherical metal particles and metal flakes as a laser marking or laser weldability means as claimed in claim 1,
**characterised in that**
the spherical metal particles and metal flakes are each independently largely free of heavy metals.

3. Use of a mixture of spherical metal particles and metal flakes as a laser marking or laser weldability means as claimed in claim 1 or 2,
**characterised in that**
the proportion of spherical metal particles and metal flakes in the plastic lies within a range of 0.0005 to 0.8 % by weight, preferably 0.001 to 0.5 % by weight, by reference to the total weight of the plastic in each case.

4. Use of a mixture of spherical metal particles and metal flakes as a laser marking or laser weldability means as claimed in one of the preceding claims,
**characterised in that**
the grain size distribution of the spherical metal particles and metal flakes in the mixture measured by laser granulometry in the form of the volume-averaged, cumulative intensity profile of the grain size distribution has a D_{mixture, 90} value of < 70 µm and a D_{mixture, 50} value of < 40 µm.

5. Use of a mixture of spherical metal particles and metal flakes as a laser marking or laser weldability means as claimed in one of the preceding claims,
**characterised in that**
the volume-averaged, cumulative intensity profile of the grain size distribution of the spherical metal particles and metal flakes in the mixture has a D_{mixture.90} value of < 65 µm and a D_{mixture. 50} value of < 35 µm.

6. Use of a mixture of spherical metal particles and metal flakes as a laser marking or laser weldability means as claimed in one of the preceding claims,
**characterised in that**
the spherical metal particles and/or the metal flakes contain or comprise metals selected from the group comprising aluminium, copper, silver, gold, zinc, tin, iron, titanium, vanadium, magnesium, tungsten and alloys thereof.

7. Use of a mixture of spherical metal particles and metal flakes as a laser marking or laser weldability means as claimed in one of the preceding claims,
**characterised in that**
the spherical metal particles and metal flakes have a natural metal oxide content of not more than 15 % by weight by reference to the total weight of spherical metal particles and metal flakes.

8. Use of a mixture of spherical metal particles and metal flakes as a laser marking or laser weldability means as claimed in one of the preceding claims,
**characterised in that**
the spherical metal particles and/or the metal flakes are provided with at least one inorganic metal oxide coating.

9. Use of a mixture of spherical metal particles and metal flakes as a laser marking or laser weldability means as claimed in claim 8,
**characterised in that**
the metal oxide coating contains SiO₂ or is made from SiO₂.

10. Use of a mixture of spherical metal particles and metal flakes as a laser marking or laser weldability means as claimed in one of the preceding claims,
**characterised in that**
the weight ratio of spherical metal particles to metal flakes lies within a range oaf 500:1 to 1:1.

11. Use of a mixture of spherical metal particles and metal flakes as a laser marking or laser weldability means as claimed in one of the preceding claims,
**characterised in that**
the grain size distribution of the metal flakes measured by laser granulometry in the form of the volume-averaged, cumulative intensity profile of the grain size distribution has a D_{flake.50} value within a range of from 1 to 60 µm.

12. Master batch,
**characterised in that**
the master batch contains the mixture of spherical metal particles and metal flakes used as claimed in claims 1 to 11 as well as at least one dispersion substrate.

13. Master batch as claimed in claim 12,
**characterised in that**
the dispersion substrate is selected from the group comprising plastic components, waxes, resins, additives or mixtures.

14. Master batch as claimed in claim 12 or 13,
**characterised in that**
the content of spherical metal particles and metal flakes in the master batch is 80 to 99 % by weight by reference to the total weight of the master batch.

15. Master batch as claimed in claim 12 or 13,
**characterised in that**
the content of spherical metal particles and metal flakes in the master batch lies within a range of 0.001 to 5 % by weight by reference to the total weight of the master batch.

16. Use of a master batch as claimed in one of claims 12 to 15 for producing a laser-markable and/or laser-weldable plastic.

17. Laser-markable and/or laser-weldable plastic,
**characterised in that**
the plastic contains a mixture of spherical metal particles and metal flakes used as claimed in one of claims 1 to 11 or a master batch as claimed in one of claims 12 to 15.

18. Laser-markable and/or laser-weldable plastic as claimed in claim 17,
**characterised in that**
the proportion of spherical metal particles and metal flakes in the plastic lies within a range of 0.0005 to 0.8 % by weight, preferably 0.001 to 0.5 % by weight, by reference to the total weight of the plastic in each case.

19. Laser-markable and/or laser-weldable plastic as claimed in one of claims 17 or 18,
**characterised in that**
the proportion of spherical metal particles and metal flakes in the plastic lies within a range of 0.005 to 0.5 % by weight, preferably 0.01 to 0.1 % by weight, by reference to the total weight of the laser-markable plastic in each case.

20. Laser-markable and/or laser-weldable plastic as claimed in claim 17,
**characterised in that**
the plastic is a plastic film or a label.

21. Laser-markable and/or laser-weldable plastic as claimed in claim 20,
**characterised in that**
the plastic is a plastic film with a proportion of spherical metal particles and metal flakes within a range of from 0.01 tol.0 % by weight, preferably 0.02 to 0.5 % by weight, by reference to the total weight of the laser-markable plastic film in each case.

22. Laser-markable and/or laser-weldable plastic as claimed in one of claims 17 to 19,
**characterised in that**
the plastic is a three-dimensional plastic body.

23. Laser-markable and/or laser-weldable plastic as claimed in one of claims 17 to 22,
**characterised in that**
the laser-markable and/or laser-weldable plastic is part of an object which does not itself have to be laser-markable and/or laser-weldable.

24. Laser-markable plastic as claimed in one of claims 17 to 19,
**characterised in that**
the plastic is a heat-deformable plastic, a thermo-setting plastic, an elastomer or rubber.

25. Laser-weldable plastic as claimed in one of claims 17 to 23,
**characterised in that**
the plastic is a heat-deformable plastic.

## Revendications

1. Utilisation d'un mélange de particules métalliques sphériques et de flocons métalliques, constituant un agent de marquage laser ou un agent apte au soudage au laser, dans une matière plastique, **caractérisée en ce que** la répartition des grains, déterminée par granulométrie laser, des particules métalliques sphériques et des flocons métalliques dans le mélange, sous la forme de la répartition des grains continue cumulée, moyennée en volume, présente une valeur D_{mélange,90} 100 µm et une valeur D_{mélange,50} < 60 µm.

2. Utilisation d'un mélange de particules métalliques sphériques et de flocons métalliques, constituant un agent de marquage laser ou un agent apte au soudage au laser, selon la revendication 1, **caractérisée en ce que** les particules métalliques sphériques et les flocons métalliques sont en grande partie, indépendamment les uns des autres, exempts de métaux lourds.

3. Utilisation d'un mélange de particules métalliques sphériques et de flocons métalliques, constituant un agent de marquage laser ou un agent apte au soudage au laser, selon la revendication 1 ou 2, **caractérisée en ce que** la teneur en particules métalliques sphériques et en flocons métalliques dans la matière plastique se situe dans une plage de 0,0005 à 0,8 % en poids, de préférence de 0,001 à 0,5 % en poids, dans chaque cas par rapport au poids total de la matière plastique.

4. Utilisation d'un mélange de particules métalliques sphériques et de flocons métalliques, constituant un agent de marquage laser ou un agent apte au soudage au laser, selon l'une quelconque des revendications précédentes, **caractérisée en ce que** la répartition des grains, déterminée par granulométrie laser, des particules métalliques sphériques et des flocons métalliques dans le mélange, sous la forme de la répartition des grains continue cumulée, moyennée en volume, présente une valeur D_{mélange,90} < 70 µm et une valeur D_{mélange,50} < 40 µm.

5. Utilisation d'un mélange de particules métalliques sphériques et de flocons métalliques, constituant un agent de marquage laser ou un agent apte au soudage au laser, selon l'une quelconque des revendications précédentes, **caractérisé en ce que** la répartition des grains continue cumulée, moyennée en volume, présente une valeur D_{mélange,90} < 65 µm et une valeur D_{mélange,50} < 35 µm.

6. Utilisation d'un mélange de particules métalliques sphériques et de flocons métalliques, constituant un agent de marquage laser ou un agent apte au soudage au laser, selon l'une quelconque des revendications précédentes, **caractérisée en ce que** les particules métalliques sphériques et les flocons métalliques contiennent des métaux ou sont formés par des métaux qui sont choisis dans le groupe qui est constitué de l'aluminium, du cuivre, de l'argent, de l'or, du zinc, de l'étain, du fer, du titane, du vanadium, du magnésium, du tungstène et d'alliages de ceux-ci.

7. Utilisation d'un mélange de particules métalliques sphériques et de flocons métalliques, constituant un agent de marquage laser ou un agent apte au soudage au laser, **caractérisée en ce que** les particules métalliques sphériques et les flocons métalliques possèdent une teneur en oxydes métalliques naturelle ne dépassant pas 15 % en poids par rapport au poids total des particules métalliques sphériques et des flocons métalliques.

8. Utilisation d'un mélange de particules métalliques sphériques et de flocons métalliques, constituant un agent de marquage laser ou un agent apte au soudage au laser, **caractérisée en ce que** les particules métalliques sphériques et les flocons métalliques sont munis d'au moins une couche d'oxydes métalliques anorganiques.

9. Utilisation d'un mélange de particules métalliques sphériques et de flocons métalliques, constituant un agent de marquage laser ou un agent apte au soudage au laser, selon la revendication 8, **caractérisée en ce que** la couche d'oxydes métalliques contient du SiO₂ ou est formée par du SiO₂.

10. Utilisation d'un mélange de particules métalliques sphériques et de flocons métalliques, constituant un agent de marquage laser ou un agent apte au soudage au laser, **caractérisée en ce que** le rapport de poids entre les particules métalliques sphériques et les flocons métalliques se situe dans une plage de 500:1 jusqu'à 1:1.

11. Utilisation d'un mélange de particules métalliques sphériques et de flocons métalliques, constituant un agent de marquage laser ou un agent apte au soudage au laser, **caractérisée en ce que** la répartition des grains, déterminée par granulométrie laser, des flocons métalliques, sous la forme de la répartition des grains continue cumulée, moyennée en volume, présente une valeur D_{flocons,50} dans une plage de 1 à 60 µm.

12. Mélange maître **caractérisé en ce que** le mélange maître contient le mélange, à utiliser selon l'une quelconque des revendications 1 à 11, formé de particules métalliques sphériques et de flocons métalliques, ainsi que d'un support de dispersion.

13. Mélange maître selon la revendication 12, **caractérisé en ce que** le support de dispersion est choisi dans le groupe constitué de composants plastiques, de cires, de résines, d'additifs ou de mélanges de ceux-ci.

14. Mélange maître selon la revendication 12 ou 13, **caractérisé en ce que** la teneur en particules métalliques sphériques et en flocons métalliques dans le mélange maître est de l'ordre de 80 à 99 % en poids par rapport au poids total du mélange maître.

15. Mélange maître selon la revendication 12 ou 13, **caractérisé en ce que** la teneur en particules métalliques sphériques et en flocons métalliques dans le mélange maître se situe dans une plage de 0,001 à 5 % en poids par rapport au poids total du mélange maître.

16. Utilisation d'un mélange maître selon l'une quelconque des revendications 12 à 15 pour la réalisation d'une matière plastique apte à être marquée par laser et/ou apte à être soudée au laser.

17. Matière plastique apte à être marquée par laser et/ou apte à être soudée au laser, **caractérisée en ce que** la matière plastique contient un mélange de particules métalliques sphériques et de flocons métalliques, à utiliser selon l'une quelconque des revendications 1 à 11, ou un mélange maître selon l'une quelconque des revendications 12 à 15.

18. Matière plastique apte à être marquée par laser et/ou apte à être soudée au laser selon la revendication 17, **caractérisée en ce que** la teneur en particules métalliques sphériques et en flocons métalliques dans la matière plastique se situe dans une plage de 0,0005 à 0,8 % en poids, de préférence de 0,001 à 0,5 % en poids, dans chaque cas par rapport au poids total de la matière plastique.

19. Matière plastique apte à être marquée par laser et/ou apte à être soudée au laser selon la revendication 17 ou 18, **caractérisée en ce que** la teneur en particules métalliques sphériques et en flocons métalliques dans la matière plastique se situe dans une plage de 0,005 à 0,5 % en poids, de préférence de 0,01 à 0,1 % en poids, dans chaque cas par rapport au poids total de la matière plastique apte à être marquée par laser.

20. Matière plastique apte à être marquée par laser et/ou apte à être soudée au laser selon la revendication 17, **caractérisée en ce que** la matière plastique est une feuille plastique ou une étiquette.

21. Matière plastique apte à être marquée par laser et/ou apte à être soudée au laser selon la revendication 20, **caractérisée en ce que** la matière plastique comporte une feuille plastique avec une teneur en particules métalliques sphériques et en flocons métalliques se situant dans une plage de 0,01 à 1,0 % en poids, de préférence de 0,02 à 0,5 % en poids, dans chaque cas par rapport au poids total de la matière plastique apte à être marquée par laser.

22. Matière plastique apte à être marquée par laser et/ou apte à être soudée au laser selon l'une quelconque des revendications 17 à 19, **caractérisée en ce que** la matière plastique est un corps plastique tridimensionnel,

23. Matière plastique apte à être marquée par laser et/ou apte à être soudée au laser selon l'une quelconque des revendications 17 à 22, **caractérisée en ce que** la matière plastique apte à être marquée par laser et/ou apte à être soudée au laser est une partie intégrante d'un objet qui, lui-même, doit être apte à être marqué par laser et/ou apte à être soudé au laser.

24. Matière plastique apte à être marquée par laser selon l'une quelconque des revendications 17 à 19, **caractérisée en ce que** la matière plastique comporte une matière plastique thermodurcissable, une résine thermodurcissable, un élastomère ou un caoutchouc.

25. Matière plastique apte à être marquée par laser selon l'une quelconque des revendications 17 à 23, **caractérisée en ce que** la matière plastique comporte une matière plastique thermodurcissable.
